(19) Europäisches Patentamt
European Patent Office
Office européen des brevets

(11) **EP 4 568 349 A1**

(12) **EUROPEAN PATENT APPLICATION**
published in accordance with Art. 153(4) EPC

(43) Date of publication:
**11.06.2025 Bulletin 2025/24**

(21) Application number: **23849081.7**

(22) Date of filing: **27.06.2023**

(51) International Patent Classification (IPC):
**H04W 40/22** (2009.01)     **H04B 7/026** (2017.01)

(52) Cooperative Patent Classification (CPC):
**H04B 7/026; H04W 40/22; H04W 72/044; H04W 72/20**

(86) International application number:
**PCT/CN2023/102550**

(87) International publication number:
**WO 2024/027371 (08.02.2024 Gazette 2024/06)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **01.08.2022 CN 202210918689**

(71) Applicant: **Datang Mobile Communications Equipment Co., Ltd.**
**Beijing 100085 (CN)**

(72) Inventors:
• **LI, Xiaojiao**
  **Beijing 100085 (CN)**
• **WANG, Junwei**
  **Beijing 100085 (CN)**

(74) Representative: **Cabinet Nony**
**11 rue Saint-Georges**
**75009 Paris (FR)**

(54) **METHOD, DEVICE AND APPARATUS FOR DETERMINING BEAM OF FORWARDING LINK FOR BACKHAUL, AND STORAGE MEDIUM**

(57)     Provided in the embodiments of the present disclosure are a method, device and apparatus for determining a beam of a forwarding link for backhaul, and a storage medium, which are applied to a network control repeater. The method comprises: acquiring first beam information, wherein the first beam information comprises beam information of a control link or unified beam indication information; and according to the first beam information, determining a beam of a forwarding link for backhaul; or acquiring second beam information, wherein the second beam information is the beam information of the forwarding link for backhaul that is configured by default, or the beam information of the forwarding link for backhaul that is indicated by a network device, or the beam information of the forwarding link for backhaul that is determined according to a predefined rule; and according to the second beam information, determining the beam of the forwarding link for backhaul.

Obtaining first beam information, where the first beam information comprises beam information for a control link or unified beam indication information — 200

Determining a beam for a backhaul link based on the first beam information — 201

FIG. 2

EP 4 568 349 A1

**Description**

CROSS-REFERENCES TO RELATED APPLICATIONS

The present application claims priority to Chinese patent application No. 202210918689.0 filed on August 01, 2022, entitled "Method, Device and Apparatus for Determining Beam of Forwarding Link for Backhaul, and Storage Medium", which is hereby incorporated by reference in its entirety.

FIELD

The present application relates to the field of wireless communication, and in particular, to methods and apparatuses for determining beam for backhaul link, devices and a storage medium.

BACKGROUND

A repeater is a wireless signal relay product, and is a solution that may effectively supplement a coverage capability of a base station in network deployment. A network control repeater (NCR) is mainly different from a traditional repeater in that the base station may perform network control on an NCR serving the base station. There are two links between the base station and the NCR, one is a control link (C-link) and the another is a backhaul link (FLB).
Since the NCR does not perform baseband processing on a signal in the FLB, performing beam management on the FLB will increase the difficulty in beam management for the NCR, and more time and resources are required for measurement and processing signals, which increases system overhead. Therefore, how to provide a more feasible solution for determining a beam for the FLB is a problem that the industry urgently needs to solve.

BRIEF SUMMARY

In view of the problems in the related art, embodiments of the present application provide methods and apparatuses for determining beam for backhaul link, devices and a storage medium.
An embodiment of the present application provides a method for determining beam for backhaul link, performed by a network control repeater, including:

　　obtaining first beam information, where the first beam information includes beam information for a control link or unified beam indication information; and

　　determining a beam for a backhaul link based on the first beam information;

or

　　obtaining second beam information, where the second beam information is default configured beam information for a backhaul link, or beam information for a backhaul link indicated by a network device, or beam information for a backhaul link determined based on a predefined rule; and

　　determining a beam for the backhaul link based on the second beam information.

In an embodiment, determining the beam for the backhaul link based on the first beam information includes:
determining the beam for the backhaul link based on most recently received first beam information.
In an embodiment, determining the beam for the backhaul link based on the most recently received first beam information includes:

　　determining the beam for the backhaul link based on the most recently received first beam information starting from a first timing,

　　where a way for determining the first timing includes:

　　　　taking a start symbol of a first slot after a first control signaling being effective as the first timing; or

　　　　taking a start symbol of a transmission slot for a control link indicated by a first control signaling as the first timing; or

　　　　taking a start symbol of a next slot counting from a transmission slot for a control link indicated by a first control signaling as the first timing;

　　　　where the first control signaling is a control signaling indicating the most recently received first beam information.

In an embodiment, determining the beam for the backhaul link based on the most recently received first beam information includes:

　　in case that a first timer does not expire, determining the beam for the backhaul link based on the most recently received first beam information,

　　where the first timer starts at the first timing.

In an embodiment, the method further includes:
in case that the first beam information is unable to be used, performing any one of the following operations:

　　determining the beam for the backhaul link based on default configured beam information;

determining the beam for the backhaul link based on a given beam set and a polling rule;

determining the beam for the backhaul link based on beam information for the backhaul link indicated by a network device; or

not performing data transmission and/or data reception in a backhaul link.

In an embodiment, determining the beam for the backhaul link based on the first beam information includes any one of the following:

in case that an uplink beam and a downlink beam are separated from each other, determining an uplink beam for the backhaul link based on first uplink beam information; and/or, determining a downlink beam for the backhaul link based on first downlink beam information; or

in case that an uplink beam and a downlink beam are jointly managed, determining an uplink beam for the backhaul link and a downlink beam for the backhaul link based on first joint uplink and downlink beam information.

In an embodiment, the method further includes:

sending first parameter information to the network device, where the first parameter information is used to indicate whether the network control repeater supports the joint uplink beam and downlink beam management; and/or

receiving second parameter information sent from the network device, where the second parameter information is used to indicate whether the network control repeater performs the joint uplink beam and downlink beam management.

In an embodiment, the method further includes:

sending first indication information to the network device, where the first indication information is used to indicate an index of a duration of the first timer in a timer duration set; and/or

receiving second indication information sent from the network device, where the second indication information is used to indicate an index of a duration of the first timer in a timer duration set.

In an embodiment, the timer duration set is determined based on enumerated duration values or a quantity of symbols; or, the timer duration set is determined based on one or more of a configured minimum duration value, a configured maximum duration value, or a configured granularity.

In an embodiment, the method further includes: receiving third parameter information sent from the network device, where the third parameter information is used to indicate whether the network control repeater uses the unified beam indication information for the backhaul link.

In an embodiment, the first beam information includes one or more of the following:

a beam index;

an index of a reference signal resource for measurement; or

a time domain resource location using the first beam information.

An embodiment of the present application further provides a method for determining beam for backhaul link, performed by a network device, including:

determining first beam information, where the first beam information includes beam information corresponding to a control link between a network control repeater and the network device, or unified beam indication information corresponding to a network control repeater; and

determining a beam for a backhaul link between the network control repeater based on the first beam information;

or

determining second beam information, where the second beam information is default configured beam information for a backhaul link, or beam information for a backhaul link indicated by the network device to the network control repeater, or beam information for a backhaul link determined based on a predefined rule; and

determining the beam for the backhaul link based on the second beam information.

In an embodiment, determining the beam for the backhaul link between the network control repeater based on the first beam information includes:
determining the beam for the backhaul link based on most recently sent first beam information.
In an embodiment, determining the beam for the backhaul link based on the most recently sent first beam information includes:

determining the beam for the backhaul link based on most recently sent first beam information starting from a first timing,

where a way for determining the first timing includes:

taking a start symbol of a first slot after a first control signaling being effective as the first timing; or

taking a start symbol of a transmission slot for a control link indicated by a first control signaling as the first timing; or

taking a start symbol of a next slot counting from a transmission slot for a control link indicated by a first control signaling as the first timing;

where the first control signaling is a control signaling indicating the most recently sent first beam information.

In an embodiment, determining the beam for the backhaul link based on the most recently sent first beam information includes:

in case that a first timer does not expire, determining the beam for the backhaul link based on the most recently sent first beam information,

where the first timer starts at the first timing.

In an embodiment, the method further includes: in case of determining that the network control repeater is unable to use the first beam information, performing any one of the following operations:

determining the beam for the backhaul link based on default configured beam information;

determining the beam for the backhaul link based on a given beam set and a polling rule;

determining the beam for the backhaul link based on beam information for the backhaul link indicated by the network device; or

not performing data transmission and/or data reception in the backhaul link.

In an embodiment, determining the beam for the backhaul link between the network control repeater based on the first beam information includes:

in case that an uplink beam and a downlink beam are separated from each other, determining an uplink beam for the backhaul link based on first uplink beam information; and/or, determining a downlink beam for the backhaul link based on first downlink beam information; or

in case that an uplink beam and a downlink beam are jointly managed, determining an uplink beam for the backhaul link and a downlink beam for the backhaul link based on first joint uplink and downlink beam information.

In an embodiment, the method further includes:

receiving first parameter information sent from the network control repeater, where the first parameter information is used to indicate whether the network control repeater supports the joint uplink beam and downlink beam management; and/or

sending second parameter information to the network control repeater, where the second parameter information is used to indicate whether the network control repeater performs the joint uplink beam and downlink beam management.

In an embodiment, the method further includes:

receiving first indication information sent from the network control repeater, where the first indication information is used to indicate an index of a duration of the first timer in a timer duration set; and/or

sending second indication information to the network control repeater, where the second indication information is used to indicate an index of a duration of the first timer in a timer duration set.

In an embodiment, the timer duration set is determined based on enumerated duration values or a quantity of symbols; or, the timer duration set is determined based on one or more of a configured minimum duration value, a configured maximum duration value, or a configured granularity.
In an embodiment, the method further includes: sending third parameter information to the network control repeater, where the third parameter information is used to indicate whether the network control repeater uses the unified beam indication information for the backhaul link.
In an embodiment, the first beam information includes one or more of the following:

a beam index;

an index of a reference signal resource for measurement; or

a time domain resource location using the first beam information.

An embodiment of the present application further provides a network control repeater, including a memory, a transceiver, and a processor,

where the memory is used for storing a computer program, the transceiver is used for receiving and transmitting data under control of the processor, and the processor is used for reading the computer program in the memory and performing the following operations:

obtaining first beam information, where the first beam information includes beam information for a control link or unified beam indication information; and

determining a beam for a backhaul link based on the first beam information;

or

obtaining second beam information, where the second beam information is default configured beam information for a backhaul link by, or beam information for a backhaul link indicated by a network device, or beam information for a backhaul link determined based on a predefined rule; and

determining a beam for the backhaul link based on the second beam information.

In an embodiment, determining the beam for the backhaul link based on the first beam information includes:
determining the beam for the backhaul link based on most recently received first beam information.

In an embodiment, determining the beam for the backhaul link based on the most recently received first beam information includes:

determining the beam for the backhaul link based on the most recently received first beam information starting from a first timing,

where a way for determining the first timing includes:

taking a start symbol of a first slot after a first control signaling being effective as the first timing; or

taking a start symbol of a transmission slot for a control link indicated by a first control signaling as the first timing; or

taking a start symbol of a next slot counting from a transmission slot for a control link indicated by a first control signaling as the first timing;

where the first control signaling is a control signaling indicating the most recently received first beam information.

In an embodiment, determining the beam for the backhaul link based on the most recently received first beam information includes:

in case that a first timer does not expire, determining the beam for the backhaul link based on the most recently received first beam information,

where the first timer starts at the first timing.

In an embodiment, the operations further include:
in case that the first beam information is unable to be used, performing any one of the following operations:

determining the beam for the backhaul link based on default configured beam information;

determining the beam for the backhaul link based on a given beam set and a polling rule;

determining the beam for the backhaul link based on beam information for the backhaul link indicated by a network device; or

not performing data transmission and/or data reception in a backhaul link.

In an embodiment, determining the beam for the backhaul link based on the first beam information includes any one of the following:

in case that an uplink beam and a downlink beam are separated from each other, determining an uplink beam for the backhaul link based on first uplink beam information; and/or, determining a downlink beam for the backhaul link based on first downlink beam information; or

in case that an uplink beam and a downlink beam are jointly managed, determining an uplink beam for the backhaul link and a downlink beam for the backhaul link based on first joint uplink and downlink beam information.

In an embodiment, the operations further include:

sending first parameter information to the network device, where the first parameter information is used to indicate whether the network control repeater supports the joint uplink beam and downlink beam management; and/or

receiving second parameter information sent from the network device, where the second parameter information is used to indicate whether the network control repeater performs the joint uplink beam and downlink beam management.

In an embodiment, the operations further include:

sending first indication information to the network device, where the first indication information is used to indicate an index of a duration of the first timer in a timer duration set; and/or

receiving second indication information sent from the network device, where the second indication information is used to indicate an index of a duration of the first timer in a timer duration set.

In an embodiment, the timer duration set is determined based on enumerated duration values or a quantity of symbols; or, the timer duration set is determined based on one or more of a configured minimum duration value, a configured maximum duration value, or a configured granularity.

In an embodiment, the operations further include:
receiving third parameter information sent from the network device, where the third parameter information is used to indicate whether the network control repeater uses the unified beam indication information for the backhaul link.

In an embodiment, the first beam information includes one or more of the following:

a beam index;

an index of a reference signal resource for measurement; or

a time domain resource location using the first beam information.

An embodiment of the present application further provides a network device, including a memory, a transceiver and a processor;
the memory is used for storing a computer program, the transceiver is used for receiving and transmitting data under control of the processor and the processor is used for reading the computer program in the memory and performing the following operations:

determining first beam information, where the first beam information includes beam information corresponding to a control link between a network control repeater and the network device, or unified beam indication information corresponding to a network control repeater; and

determining a beam for a backhaul link between the network control repeater based on the first beam information;

or

determining second beam information, where the second beam information is default configured beam information for a backhaul link, or beam information for a backhaul link indicated by the network device to the network control repeater, or beam information for a backhaul link determined based on a predefined rule; and

determining the beam for the backhaul link based on the second beam information.

In an embodiment, determining the beam for the backhaul link between the network control repeater based on the first beam information includes:
determining the beam for the backhaul link based on most recently sent first beam information.

In an embodiment, determining the beam for the backhaul link based on the most recently sent first beam information includes:

determining the beam for the backhaul link based on most recently sent first beam information starting from a first timing,

where a way for determining the first timing includes:

taking a start symbol of a first slot after a first control signaling being effective as the first timing; or

taking a start symbol of a transmission slot for a control link indicated by a first control signaling as the first timing; or

taking a start symbol of a next slot counting from a transmission slot for a control link indicated by a first control signaling as the first timing;

where the first control signaling is a control signaling indicating the most recently sent first beam information.

In an embodiment, determining the beam for the backhaul link based on the most recently sent first beam information includes:

in case that a first timer does not expire, determining the beam for the backhaul link based on the most recently sent first beam information,

where the first timer starts at the first timing.

In an embodiment, the operations further include:
in case of determining that the network control repeater is unable to use the first beam information, performing any one of the following operations:

determining the beam for the backhaul link based on default configured beam information;

determining the beam for the backhaul link based on a given beam set and a polling rule;

determining the beam for the backhaul link based on beam information for the backhaul link indicated by the network device; or

not performing data transmission and/or data reception in the backhaul link.

In an embodiment, determining the beam for the backhaul link between the network control repeater based on the first beam information includes:

in case that an uplink beam and a downlink beam are separated from each other, determining an uplink beam for the backhaul link based on first uplink beam information; and/or, determining a downlink beam for the backhaul link based on first downlink beam information; or

in case that an uplink beam and a downlink beam are jointly managed, determining an uplink beam for the backhaul link and a downlink beam for the backhaul link based on first joint uplink and downlink beam information.

In an embodiment, the operations further include:

receiving first parameter information sent from the network control repeater, where the first parameter information is used to indicate whether the network control repeater supports the joint uplink beam and downlink beam management; and/or

sending second parameter information to the network control repeater, where the second parameter information is used to indicate whether the network control repeater performs the joint uplink beam and downlink beam management.

In an embodiment, the operations further include:

receiving first indication information sent from the network control repeater, where the first indication information is used to indicate an index of a duration of the first timer in a timer duration set; and/or

sending second indication information to the network control repeater, where the second indication information is used to indicate an index of a duration of the first timer in a timer duration set.

In an embodiment, the timer duration set is determined based on enumerated duration values or a quantity of symbols; or, the timer duration set is determined based on one or more of a configured minimum duration value, a configured maximum duration value, or a configured granularity.

In an embodiment, the operations further include:

sending third parameter information to the network control repeater, where the third parameter information is used to indicate whether the network control repeater uses the unified beam indication information for the backhaul link.

In an embodiment, the first beam information includes one or more of the following:

a beam index;

an index of a reference signal resource for measurement; or

a time domain resource location using the first beam information.

An embodiment of the present application further provides an apparatus for determining beam for backhaul link, for use in a network control repeater, including:

an obtaining unit, used for obtaining first beam information, where the first beam information includes beam information for a control link or unified beam indication information; and

a first determining unit, used for determining a beam for a backhaul link based on the first beam information;

or

an obtaining unit, used for obtaining second beam information, where the second beam information is default configured beam information for a backhaul link, or beam information for a backhaul link indicated by a network device, or beam information for a backhaul link determined based on a predefined rule; and

a first determining module, used for determining a beam for the backhaul link based on the second beam information.

An embodiment of the present application further provides an apparatus for determining beam for backhaul link, for use in a network device, including:

a second determining unit, used for determining first beam information, where the first beam information includes beam information corresponding to a control link between a network control repeater and the network device, or unified beam indication information corresponding to a network control repeater; and

a third determining unit, used for determining a beam for a backhaul link between the network control repeater based on the first beam information;

or

a second determining unit, used for determining second beam information, where the second beam information is default configured beam information for a backhaul link, or beam information for a backhaul link indicated by a network device to the network control repeater, or beam information for the backhaul link determined based on a predefined rule; and

a third determining unit, used for determining the beam for the backhaul link based on the second beam information.

An embodiment of the present application further provides a computer-readable storage medium storing a computer program, where the computer program is used to cause a computer to perform the methods for determining the beam for the backhaul link described above.

An embodiment of the present application further provides a communication device storing a computer program, where the computer program is used to cause the communication device to perform the methods for determining the beam for the backhaul link described above.

An embodiment of the present application further provides a computer-readable storage medium storing a computer program, where the computer program is used to cause a processor to perform the methods for determining the beam for the backhaul link described above.

An embodiment of the present application further provides a chip product storing a computer program, where the computer program is used to cause the chip product to perform the methods for determining the beam for the backhaul link described above.

In the methods and apparatuses for determining the beam of backhaul link, the devices and the storage medium provided by the embodiments of the present application, the NCR may determine the beam for the FLB using the beam information for the C-link or unified beam indication information without performing separate beam management on the FLB, thereby simplifying a procedure of beam management and saving system overhead for measurement and signal processing.

BRIEF DESCRIPTION OF THE DRAWINGS

To illustrate solutions in the embodiments of the present application or the related art more clearly, the drawings used in the descriptions of the embodiments or the prior art will be briefly described below. The drawings in the following description are some embodiments of the present application, and other drawings may be obtained based on these drawings without any creative work for those skilled in the related art.

FIG. 1 is a schematic structural diagram of a network control repeater (NCR) link according to the related art;

FIG. 2 is a first schematic flowchart of a method for determining beam for backhaul link (FLB) according to an embodiment of the present application;

FIG. 3 is a schematic diagram of a way for determining an effective timing of beam information for the FLB according to an embodiment of the present application;

FIG. 4 is a second schematic flowchart of a method for determining beam for backhaul link (FLB) according to an embodiment of the present application;

FIG. 5 is a first schematic diagram of implementing a method for determining beam for FLB according to an embodiment of the present application;

FIG. 6 is a second schematic diagram of implementing a method for determining beam for FLB according to an embodiment of the present application;

FIG. 7 is a third schematic diagram of implementing a method for determining beam for FLB according to an embodiment of the present application;

FIG. 8 is a fourth schematic diagram of implementing a method for determining beam for FLB according to an embodiment of the present application;

FIG. 9 is a schematic structural diagram of a network control repeater according to an embodiment of the present application.

FIG. 10 is a schematic structural diagram of a network device according to an embodiment of the present application.

FIG. 11 is a first schematic structural diagram of an apparatus for determining beam for backhaul link according to an embodiment of the present application; and

FIG. 12 is a second schematic structural diagram of an apparatus for determining beam for backhaul link according to an embodiment of the present application.

## DETAILED DESCRIPTION

In the embodiments of the present application, the term "and/or" describes a related relationship of associated objects, and indicates that there may be three kinds of relationships. For example, A and/or B may represent that A exists alone, A and B exist simultaneously, and B exists alone. Character "/" generally indicates that the associated objects have an "or" relationship.

In the embodiments of the present application, the term "multiple" refers to two or more than two, and other quantifiers are similar.

The solutions in the embodiments of the present application are clearly and completely described in the following with reference to the accompanying drawings in the embodiments of the present application. These embodiments are only a part of the embodiments of the present application, and not all of the embodiments. All other embodiments obtained by a skilled person in the art without any creative effort belong to the scope of the present application.

Some contents associated with embodiments of the present application are firstly introduced to understand solutions of the embodiments of the present application more clearly.

A repeater, as a wireless signal relay product, may be used as one of necessary ways to achieve a goal of "small capacity and large coverage". Advantages of using the repeater for network deployment are that, first, network coverage may be ensured without increasing a quantity of base stations; and second, a cost of the repeater is lower than a cost of a traditional microcellular system with the same effect. The repeater is a preferred solution to extend a coverage capability of a communication network. Compared with a base station, the repeater has advantages of simple structure, low investment and convenient installation, and may be widely used in blind spots and weak areas that are difficult to be covered, such as shopping malls, hotels, airports, docks, stations, stadiums, entertainment halls, subways, tunnels, highways, islands and other places, to improve a communication quality and solve problems such as dropped calls.

A new type of repeater, for example a network control repeater (NCR), is formed by adding a control plane protocol stack to a traditional repeater. The base station may control some functions of the repeater by sending network control information. When the repeater serves a base station, the base station is required to be able to configure beam information for the repeater. Beam information in the present application refers to: the beam information for sending and receiving beams between the repeater and the base station.

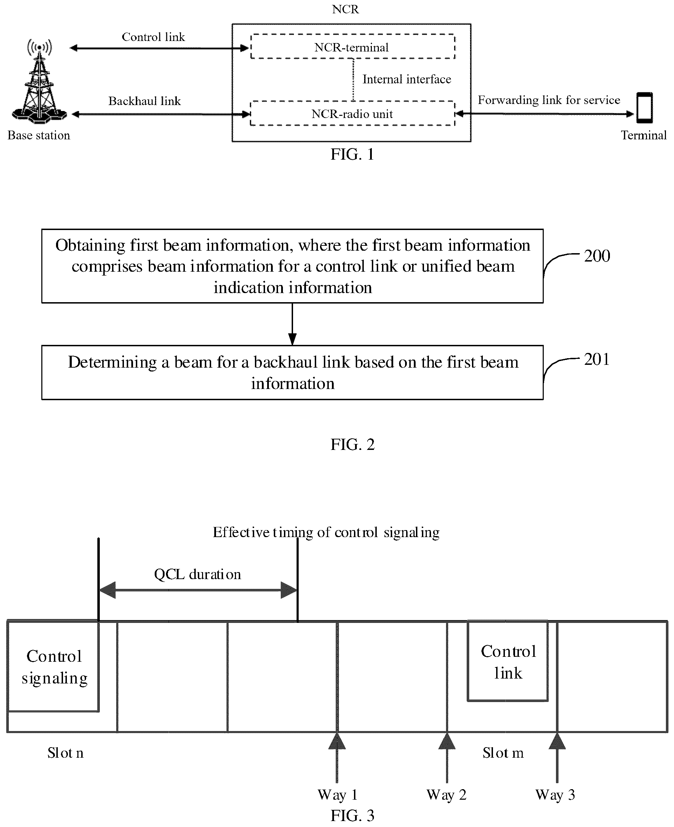

FIG. 1 is a schematic structural diagram of an NCR link according to the related art. FIG. 1 shows a link relationship between a base station, an NCR and a terminal. There are two links between the base station and the NCR, one is a control link (C-link) and another is a backhaul link (FLB). Both the C-link and the FLB have uplinks and downlinks. In an actual resource allocation procedure, the C-link and the FLB may use frequency division multiplexing (FDM) (simultaneously) or time division multiplexing (TDM). The uplink and downlink processing methods may be the same or different.

In case that the FLB and the C-link perform beam management separately, since NCR does not perform baseband processing on a signal in the FLB, it is difficult to perform beam management, and more time and resources are required for measurement and processing signals. Since a signal transmission path of the FLB is basically consistent with a signal transmission path of C-link, the present application provides a solution for determining a beam for the FLB. The FLB may use the same beam information as the C-link, and only the C-link may be managed. The FLB uses a beam direction of C-link, and the FLB does not perform separate beam management, thereby simplifying an NCR beam management procedure and reducing system overhead.

In addition, since transmission and reception timings of the C-link may be different from transmission and reception timings of the FLB, for example, when the TDM is used, the C-link and the FLB are not transmitted at the same symbol, it is necessary to determine a rule for the FLB to use a beam for the C-link, and the beam direction of the FLB is then determined. Even if FDM is used, the C-link may not exist at all symbols. When the C-link exists at the symbol where the FLB is located, the beam direction of C-link at this time is directly used. However, when the C-link does not exist at a symbol where the FLB is located, it is also necessary to determine the rule for the FLB to use the beam for the C-link.

FIG. 2 is a first schematic flowchart of a method for determining beam for backhaul link according to an embodiment of the present application. The method is performed by an NCR. As shown in FIG. 2, the method includes the following steps.

Step 200: obtaining first beam information, where the first beam information includes beam information for a control link or unified beam indication information.

Step 201: determining a beam for a backhaul link based on the first beam information.

In some embodiments, the method includes:

obtaining second beam information, where the second beam information is default configured beam information for a backhaul link, or beam information for a backhaul link indicated by a network device, or beam information for a backhaul link determined based on a predefined rule; and

determining the beam for the backhaul link based on the second beam information.

In an embodiment of the present application, the NCR may not perform beam management on the FLB separately, but may use the beam information for a C-link or unified beam indication information to determine the beam for the backhaul link.

The unified beam indication information may also be referred to as a unified transmission configuration indicator (TCI) state. In an embodiment, the unified beam indication information or the unified TCI state may be UnifiedTCIstate.

For example, in case that the NCR does not configure the unified beam indication information, the NCR may determine the beam for the FLB using the beam information for the C-link as the beam information for the FLB.

For another example, in case that the NCR configures the unified beam indication information, the NCR may determine the beam for the FLB using the unified beam indication information as the beam information for the FLB.

In an embodiment, the first beam information may include one or more of a beam index, an index of a reference signal resource for measurement, or a time domain resource location using the first beam information.

For example, the network device may configure the beam information for the C-link or unified beam indication information by a higher layer parameter, or specify the beam information for the C-link or unified beam indication information by side control information (SCI). The configuration way may be a beam identifier (ID) or an index of the reference signal resource for measurement corresponding to a beam, and the NCR may determine a beam corresponding to the beam ID or a beam corresponding to the index of the reference signal resource for measurement as the beam for the FLB. In an embodiment, the first beam information may further include a time domain resource location using the first beam information, and the NCR may determine to use the corresponding first beam information at which time domain resource location.

In some embodiments, the NCR may use the second beam information as the beam information for the FLB, and the second beam information may be default configured beam information for the backhaul link, or beam information for a backhaul link indicated by a network device, or beam information for a backhaul link determined based on a predefined rule.

For example, the network device may configure the second beam information by a higher layer parameter, or specify the second beam information by the SCI, and the configuration way may be a beam identifier (ID) or an index of the reference signal resource for measurement corresponding to a beam. In an embodiment, the second beam information may further include a time domain resource location using the second beam information, and the NCR may determine to use the corresponding second beam information at which time domain resource location.

In the method for determining the beam of backhaul link provided by the embodiments of the present application, the NCR may determine the beam for the FLB using the beam information for the C-link or unified beam indication information without performing separate beam management on the FLB, thereby simplifying a procedure of beam management and saving system overhead for measurement and signal processing.

In an embodiment, determining the beam for the backhaul link based on the first beam information includes:

determining the beam for the backhaul link based on most recently received first beam information.

Specifically, in an embodiment, in case that the beam for the FLB is determined using the beam information for the C-link, the NCR may determine the beam for the FLB using the most recently received beam information for the C-link. For example, the NCR may take the most recently received beam information for the C-link as the beam information for the FLB to determine the beam for the FLB.

In an embodiment, in case that the beam for the FLB is determined using the unified beam indication information, the NCR may determine the beam for the FLB using most recently received unified beam indication information. For example, the NCR may take the most recently received unified beam indication information as the beam information for the FLB to determine the beam for the FLB.

In an embodiment, determining the beam for the backhaul link based on the most recently received first beam information includes:

determining the beam for the backhaul link based on the most recently received first beam information starting from a first timing,

where a way for determining the first timing includes:

taking a start symbol of a first slot after a first control signaling being effective as the first timing; or

taking a start symbol of a transmission slot for a control link indicated by a first control signaling as the first timing; or

taking a start symbol of a next slot counting from a transmission slot for a control link indicated by a first control signaling as the first timing;

where the first control signaling is a control signaling indicating the most recently received first beam information.

Specifically, in case that the most recently received beam information for the C-link or the most recently received unified beam indication information is taken as the beam information for the FLB, it is necessary to determine an effective timing of the beam information for the FLB, that is, from which timing, the most recently received beam information for the C-link or the most recently received unified beam indication information may be taken as the beam information for the FLB.

The effective timing of the beam information for the FLB may be referred as to a first timing. FIG. 3 is a schematic diagram of a way for determining an effective timing of beam information for the FLB according to an embodiment of the present application. FIG. 3 shows three possible ways for determining the first timing. It is assumed that an index of a slot where the network device sends the first control signaling is n, and an index of a transmission (sending or reception) slot for C-link indicated by the first control signaling is m.

Way 1: a start symbol of a first slot after the first control signaling being effective is taken as the first timing. A slot index of the first timing is

$$n+\left\lceil \frac{timeDurationForQCL}{slot\_time} \right\rceil$$, which may also be

expressed as $\left\lceil n+\frac{timeDurationForQCL}{slot\_time} \right\rceil$, where

*timeDurationForQCL* (quasi-co-location duration) is a timing required for the first control signaling sent from the network device to be effective, which is related to capabilities of a user. *timeDurationForQCL* may be a set pre-specified by the network device, and elements in the set represent a quantity of OFDM symbols. The NCR reports index values of the elements in the set based on its own capability. *slot_time* is a duration of one slot.

Way 2: a start symbol of a transmission slot for the C-link indicated by the first control signaling is taken as the first timing, and a slot index of the first timing is m.

Way 3: a start symbol of a next slot counting from a transmission slot for a control link indicated by the first control signaling is taken as the first timing, and a slot index of the first timing is (m+1).

For the TDM mode, since the FLB will not be sent in the same time slot as the C-link, effective timings of the actual beam information for the FLB in the way 2 and the way 3 are consistent.

In an embodiment, determining the beam for the backhaul link based on the most recently received first beam information includes:

in case that a first timer does not expire, determining the beam for the backhaul link based on the most recently received first beam information,

where the first timer starts at the first timing.

Specifically, in case that a timer is not provided, the NCR may take the most recently received beam information for the C-link or the unified beam indication information as the beam information for the FLB starting from the first timing.

In case that a timer is provided, the NCR may determine in which time period to use the most recently received beam information for the C-link or the unified beam indication information as the beam information for the FLB based on the duration of the first timer. The timer may be a quasi co-location (QCL) timer, that is, a QCLtimer.

In case that a timer is provided, a start point of the timer is the effective timing of the beam information for the FLB, that is, the first timing mentioned above, and the start point of the timer may be determined through the three ways shown in FIG. 3.

For example, in case that the first timing mentioned above arrives, the NCR may set the first timer to zero and start timing. Before the first timer is longer than a given duration, if the NCR sends or receives FLB data, the beam information for the C-link or the unified beam indication information received last time is taken as the beam information for the FLB.

In an embodiment, the method further includes:

sending first indication information to the network device, where the first indication information is used to indicate an index of a duration of the first timer in a timer duration set; and/or

receiving second indication information sent from the network device, where the second indication information is used to indicate an index of a duration of the first timer in a timer duration set.

Specifically, in an embodiment, the NCR may determine the duration of the first timer by itself (for example, based on the NCR's own capabilities), and send the first indication information to the network device to indicate the index of the duration of the first timer in the timer duration set.

In an embodiment, the network device may configure the duration of the first timer by a higher layer parameter, and send the second indication message to the NCR to indicate the index of the duration of the first timer in the timer duration set.

In case that an NCR reporting way is adopted, the network device may directly use a duration value reported by each NCR, or the network device may adjust the duration value reported by the NCR, and then configure the adjusted duration value to each NCR through a higher layer parameter.

In an embodiment, the timer duration set may be determined based on enumerated duration values or a quantity of symbols; or, the timer duration set is determined based on one or more of a configured minimum duration value, a configured maximum duration value, or a configured granularity.

For example, the timer duration set may be preconfigured, and each specific element in the timer duration set may be determined by an enumeration way, such as configured according to the actual duration or number of symbols, such as {5 ms, 10 ms, 20 ms, 40 ms, 80 ms} or {7, 14, 28}, etc. The timer duration set may also be determined by configuring one or more of a minimum duration, a maximum duration, or a granularity. For example, the minimum duration = 5 ms, the maximum duration = 40 ms, and a default granularity of a system is 5 ms. The timer duration set is determined as {5 ms, 10 ms, 15 ms, 20 ms, 25 ms, 30 ms, 35 ms, 40 ms}.

In an embodiment, the method further includes: in case that the first beam information is unable to be used, performing any one of the following operations:

determining the beam for the backhaul link based on default configured beam information;

determining the beam for the backhaul link based on a given beam set and a polling rule;

determining the beam for the backhaul link based on beam information for the backhaul link indicated by a network device; or

not performing data transmission and/or data reception in a backhaul link.

Specifically, in case that the NCR is unable to use the first beam information, for example, the first beam information is not received, or the timing of determining the beam for the FLB using the corresponding first beam information does not arrived (which may also be understood as the effective timing of the beam information for the FLB does not arrived), or the first beam information is not indicated for use, or the first timer expires, or other cases that the NCR is unable to use the first beam information due to other reasons, the NCR may perform the following multiple different procedures.

(1) The beam for the FLB is determined based on the beam information by the default configuration.
For example, the system pre-sets a default beam direction, such as a broadcast beam direction or an omnidirectional beam direction, which is taken as the default beam direction. In case that the first beam information is unable to be used, the NCR may take the default beam direction as the beam direction for the FLB.

(2) The beam for the FLB is determined based on the given beam set and the polling rule.
For example, the NCR may take different beam directions as the beam direction for the FLB at different timings using the given beam set and polling rules.

(3) The beam for the FLB is determined based on the beam information for the FLB indicated by the network device.
For example, the network device may configure the beam information for the FLB by a higher layer parameter, or specify the beam information for the FLB by the SCI, and the configuration way may be a beam identifier (ID) or an index of the reference signal resource for measurement corresponding to a beam. In an embodiment, the configured beam information for the FLB may further include a time domain resource location using the beam information, and the NCR may determine to use the beam information at which time domain resource location.

(4) Data transmission and/or data reception is not performed on the FLB.

For example, in case that C-link has not been established or is temporarily interrupted, FLB also stops running, and data transmission and/or data reception operation is not performed.

In an embodiment, determining the beam for the backhaul link based on the first beam information includes any one of the following:

in case that an uplink beam and a downlink beam are separated from each other, determining an uplink beam for the backhaul link based on first uplink beam information; and/or, determining a downlink beam for the backhaul link based on first downlink beam information; or

in case that an uplink beam and a downlink beam are jointly managed, determining an uplink beam for the backhaul link and a downlink beam for the backhaul link based on first joint uplink and downlink beam information.

Specifically, in the embodiments of the present application, the uplink beam and the downlink beam may be managed separately, or the uplink beam and the downlink beam may be jointly managed.

For example, in case that the uplink beam and the downlink beam are separated from each other, the uplink beam information is not related to the downlink beam information each other, the beam for the FLB is determined using the first uplink beam information for the FLB in uplink transmission, the beam for the FLB is determined using the first downlink beam information for the FLB in downlink transmission, where the first uplink beam information refers to the first beam information corresponding to an uplink direction, and the first downlink beam information refers to the first beam information corresponding to a downlink direction.

In a possible embodiment, the first uplink beam information may be separate UL, which is used to indicate a separate uplink TCI state.

In a possible embodiment, the first downlink beam information may be separate DL, which is used to indicate a separate downlink TCI state.

In a possible embodiment, the first uplink beam information and the first downlink beam information may be one piece of information, for example, separate ULDL, which is used to indicate a separate uplink and downlink TCI state.

For example, in case that an uplink beam and a downlink beam are jointly managed, the uplink beam and the downlink beam for the FLB are determined using the first joint uplink and downlink beam information, the first joint uplink and downlink beam information includes both uplink beam information and downlink beam information. The network device or the NCR may pre-set association information of the uplink beam and the downlink beam, each uplink beam has a corresponding downlink beam, and the uplink beam is in is in one-to-one correspondence with the downlink beam. The first joint uplink and downlink beam information refers to the first beam information including joint information of the uplink beam and the downlink beam.

In a possible embodiment, the first joint uplink and downlink beam information may be joint ULDL, which is used to indicate a joint uplink downlink TCI state.

In an embodiment, the method further includes:

sending first parameter information to the network device, where the first parameter information is used to indicate whether a network control repeater supports the joint uplink beam and downlink beam management; and/or

receiving second parameter information sent from the network device, where the second parameter information is used to indicate whether the network control repeater performs the joint uplink beam and downlink beam management.

In an embodiment of the present application, the NCR may report information of whether supporting joint uplink beam and downlink beam management to the network device, or the network device may indicate the NCR whether to perform joint uplink beam and downlink beam management through parameter configuration.

For example, the NCR may report whether supporting joint uplink beam and downlink beam management through a radio resource control (RRC) parameter (such as beam type or transmission configuration indicator state type (TCI-StateType)). If the NCR supports, the parameter is configured as 1, and if the NCR does not support, the parameter is configured as 0.

For example, the network device may configure whether to perform joint uplink beam and downlink beam management through an RRC parameter (such as BeamType or TCI-StateType). If the joint uplink beam and downlink beam management is performed, the parameter is configured as 1, and if the joint uplink beam and downlink beam management is not performed, the parameter is configured as 0.

In an embodiment, the method further includes: receiving third parameter information sent from the network device, where the third parameter information is used to indicate whether the network control repeater uses the unified beam indication information for the backhaul link.

Specifically, the network device may indicate whether the NCR determines the beam for the FLB using unified beam indication information through a configuration parameter.

For example, the network device may send a RRC parameter followUnifiedTCIstate_FLB to the NCR. In case that followUnifiedTCIstate_FLB is configured to enable. In case that the unified beam indication information is received and the effective timing of beam information for the FLB arrives, the unified beam indication information may be used to determine the beam for the FLB.

In case that followUnifiedTCIstate_FLB is configured to unable, the unified beam indication information is not used to determine the beam for the FLB. For example, at this time, the FLB may use a default beam direction or a beam direction determined based on the polling rule or a beam direction indicated by the network device.

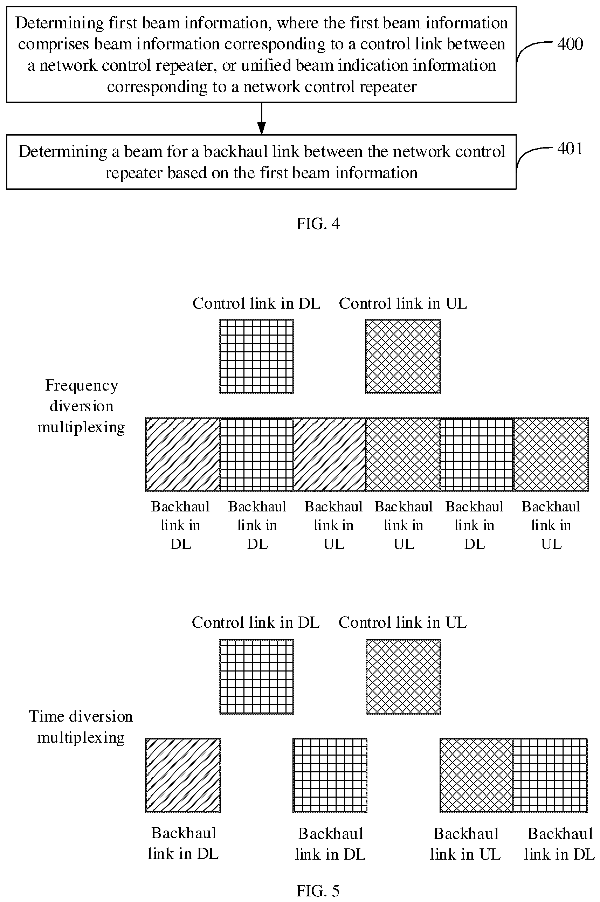

FIG. 4 is a second schematic flowchart of a method for determining beam for backhaul link according to an embodiment of the present application. The method is performed by a network device (for example, a base station). As shown in FIG. 4, the method includes the following steps.

Step 400: determining first beam information, where the first beam information includes beam information corresponding to a control link between a network control repeater and the network device, or unified beam indication information corresponding to a network control repeater.

Step 401: determining a beam for a backhaul link between the network control repeater based on the first beam information.

In some embodiments, the method includes:

determining second beam information, where the second beam information is default configured beam information for a backhaul link, or beam information for a backhaul link indicated by the network device to a network control repeater (NCR), or beam information for the backhaul link determined based on a predefined rule; and

determining the beam for the backhaul link based on the second beam information.

In an embodiment of the present application, the NCR may not perform beam management on the FLB separately, but may use the beam information for a C-link or unified beam indication information to determine the beam for the backhaul link. Accordingly, in case of determining the beam for the FLB between a certain NCR, the network device may also use beam information corresponding to the C-link between the NCR or unified beam indication information corresponding to the NCR.

The unified beam indication information may also be referred to as a unified TCI state. In an embodiment, the unified beam indication information or the unified TCI state may be UnifiedTCIstate.

For example, in case that the NCR does not configure the unified beam indication information, the network device may determine the beam for the FLB using the beam information for the C-link between the NCR as beam information for the FLB.

For example, in case that the NCR configures the unified beam indication information, the network device may determine the beam for the FLB using the unified beam indication information corresponding to the NCR as beam information for the FLB.

In an embodiment, the first beam information may include one or more of a beam index, an index of a reference signal resource for measurement, or a time domain resource location using the first beam information.

For example, the network device may configure the beam information for the C-link or the unified beam indication information by a higher layer parameter, or specify the beam information for the C-link or the unified beam indication information by SCI. The configuration way may be a beam ID or an index of the reference signal resource for measurement corresponding to a beam. In an embodiment, the first beam information may further include a time domain resource location using the first beam information, and the network device may determine to use the corresponding first beam information at which time domain resource location.

In some embodiments, the network device may use the second beam information as the beam information for the FLB, and the second beam information may be default configured beam information for the backhaul link, or beam information for a backhaul link indicated by a network device, or beam information for a backhaul link determined based on a predefined rule.

For example, the network device may configure by a higher layer parameter or specify by SCI the second beam information, and the configuration way may be a beam identifier (ID) or an index of the reference signal resource for measurement corresponding to a beam. In an embodiment, the second beam information may further include a time domain resource location using the second beam information, and the NCR may determine to use the corresponding second beam information at which time domain resource location.

In the method for determining the beam of backhaul link provided by the embodiments of the present application, both the NCR and the network device may determine the beam for the FLB using the beam information for the C-link or unified beam indication information, the NCR does not need to perform separate beam management on the FLB, thereby simplifying a procedure of beam management and saving system overhead for measurement and signal processing.

In an embodiment, determining the beam for the backhaul link between the network control repeater based on the first beam information includes:
determining the beam for the backhaul link based on most recently sent first beam information.

Specifically, in an embodiment, in case that the beam for the FLB is determined using the beam information for the C-link, the network device may determine the beam for the FLB using the most recently sent beam information for the C-link. For example, the network device may take the most recently sent beam information for the C-link as the beam information for the FLB to determine the beam for the FLB.

In an embodiment, in case that the beam for the FLB is determined using the unified beam indication information, the network device may determine the beam for the FLB using most recently sent unified beam indication information. For example, the network device may take the most recently sent unified beam indication information for the C-link as the beam information for the FLB to determine the beam for the FLB.

In an embodiment, determining the beam for the backhaul link based on the most recently sent first beam information includes:

determining the beam for the backhaul link based on most recently sent first beam information starting from a first timing,

where a way for determining the first timing includes:

taking a start symbol of a first slot after a first control signaling being effective as the first timing; or,

taking a start symbol of a transmission slot for a control link indicated by a first control signaling as the first timing; or,

taking a start symbol of a next slot counting from a transmission slot for a control link indicated by a first control signaling as the first timing;

where the first control signaling is a control signaling indicating the most recently sent first beam information.

Specifically, in case that the most recently received beam information for the C-link or the most recently received unified beam indication information is taken as the beam information for the FLB, it is necessary to determine an effective timing of the beam information for the FLB, that is, from which timing, the most recently received beam information for the C-link or the most recently received unified beam indication information may be taken as the beam information for the FLB.

The effective timing of the beam information for the FLB may be referred as to a first timing. FIG. 3 shows three possible ways for determining the first timing. It is assumed that an index of a slot where the network device sends the first control signaling is n, and an index of a transmission (sending or reception) slot for C-link indicated by the first control signaling is m.

Way 1: a start symbol of a first slot after the first control signaling being effective is taken as the first timing. A slot index of the first timing is

$$n + \left\lceil \frac{timeDurationForQCL}{slot\_time} \right\rceil$$, which may also be

expressed as $\left\lceil n + \frac{timeDurationForQCL}{slot\_time} \right\rceil$, where

*timeDurationForQCL* (quasi-co-location duration) is a timing required for the first control signaling sent from the network device to be effective, which is related to capabilities of a user. *timeDurationForQCL* may be a set pre-specified by the network device, and elements in the set represent a quantity of OFDM symbols. The NCR reports index values of the elements in the set based on its own capability. *slot_time* is a duration of one slot.

Way 2: a start symbol of a transmission slot for the C-link indicated by the first control signaling is taken as the first timing and a slot index of the first timing is m.

Way 3: a start symbol of a next slot counting from a transmission slot for a control link indicated by the first control signaling is taken as the first timing and a slot index of the first timing is m+1.

For the TDM mode, since the FLB will not be sent in the same time slot as the C-link, effective timings of the actual beam information for the FLB in the way 2 and the way 3 are consistent.

In an embodiment, determining the beam for the backhaul link based on the most recently sent first beam information includes:

in case that a first timer does not expire, determining the beam for the backhaul link based on the most recently sent first beam information,

where the first timer starts at the first timing.

Specifically, in case that a timer is not provided, the network device may take the most recently received beam information for the C-link or the unified beam indication information as the beam information for the FLB starting from the first timing.

In case that a timer is provided, the network device may determine in which time period to use the most recently received beam information for the C-link or the unified beam indication information as the beam information for the FLB based on the duration of the first timer. The timer may be a QCLtimer.

For the case where a timer is provided, a start point of the timer is the effective timing of the Beam information for the FLB, that is, the first timing mentioned above, and the start point of the timer may be determined through the three ways shown in FIG. 3.

For example, in case that the first timing mentioned above arrives, the network device may set the first timer to zero and start timing. Before the first timer is longer than a given duration, if the network device sends or receives FLB data, the beam information for the C-link or the unified beam indication information received last time is taken as the beam information for the FLB.

In an embodiment, the method further includes:

receiving first indication information sent from the network control repeater, where the first indication information is used to indicate an index of a duration of the first timer in a timer duration set; and/or

sending second indication information to the network control repeater, where the second indication information is used to indicate an index of a duration of the first timer in a timer duration set.

Specifically, in an embodiment, the NCR may determine the duration of the first timer by itself (for example, based on the NCR's own capabilities), and send the first indication information to the network device to indicating the index of the duration of the first timer in the timer duration set.

In an embodiment, the network device may configure the duration of the first timer by a higher layer parameter, and send the second indication message to the NCR to indicate the index of the duration of the first timer in the timer duration set.

In case that an NCR reporting way is adopted, the network device may directly use a duration value reported by each NCR, or the network device may adjust the duration value reported by the NCR, and then configure the adjusted duration value to each NCR through a higher layer parameter.

In an embodiment, the timer duration set is determined based on enumerated duration values or a quantity of symbols; or, the timer duration set is determined based on one or more of a configured minimum duration value, a configured maximum duration value, or a configured granularity.

For example, the timer duration set may be preconfigured, and each specific element in the timer duration set may be determined by an enumeration way, such as configured according to the actual duration or number of symbols, such as {5 ms, 10 ms, 20 ms, 40 ms, 80 ms} or {7, 14, 28}, etc. The timer duration set may also be determined by configuring one or more of a minimum duration, a maximum duration, or a granularity. For example, the minimum duration = 5 ms, the maximum duration = 40 ms, and a default granularity of a system is 5 ms. The timer duration set is determined as {5 ms, 10 ms, 15 ms, 20 ms, 25 ms, 30 ms, 35 ms, 40 ms}.

In an embodiment, the method further includes: in case of determining that the network control repeater is unable to use the first beam information, performing any one of the following operations:

determining the beam for the backhaul link based on default configured beam information;

determining the beam for the backhaul link based on a given beam set and a polling rule;

determining the beam for the backhaul link based on beam information for the backhaul link indicated by a network device; or

not performing data transmission and/or data reception in a backhaul link.

Specifically, the network device determines that the NCR is unable to use the first beam information, such as the NCR does not receive the first beam information, or the timing of determining the beam for the FLB using the corresponding first beam information does not arrived (which may also be understood as the effective timing of the beam information for the FLB does not arrived), or the first beam information is not indicated for use, or the first timer expires, or another case that the NCR is unable to use the first beam information due to other reasons, the network device may perform the following multiple different procedures.

(1) The beam for the FLB is determined based on the beam information by the default configuration.
For example, the system pre-sets a default beam direction, such as a broadcast beam direction or an omnidirectional beam direction, which is taken as the default beam direction. In case that the first beam information is unable to be used, the network device may take the default beam direction as the beam direction for the FLB.

(2) The beam for the FLB is determined based on the given beam set and the polling rule.
For example, the network device may take different beam directions as the beam direction for the FLB at different timings using the given beam set and polling rules.

(3) The beam for the FLB is determined based on the beam information for the FLB indicated by the network device.
For example, the network device may configure the beam information for the FLB by a higher layer parameter, or specify the beam information for the FLB by the SCI, and the configuration way may be a beam identifier (ID) or an index of the reference signal resource for measurement corresponding to a beam. In an embodiment, the configured beam information for the FLB may further include a time domain resource location using the beam information, and the network device may determine to use the beam information at which time domain resource location.

(4) Data transmission and/or data reception is not performed on the FLB.

For example, in case that C-link has not been established or is temporarily interrupted, FLB also stops running, and data transmission and/or data reception operation is not performed.

In an embodiment, determining the beam for the backhaul link between the network control repeater based on the first beam information includes any one of the following:

in case that an uplink beam and a downlink beam are separated from each other, determining an uplink beam for the backhaul link based on first uplink beam information; and/or, determining a downlink beam for the backhaul link based on first downlink beam information; or

in case that an uplink beam and a downlink beam are jointly managed, determining an uplink beam for the backhaul link and a downlink beam for the backhaul link based on first joint uplink and downlink beam information.

Specifically, in the embodiments of the present application, the uplink beam and the downlink beam may be managed separately, or the uplink beam and the downlink beam may be jointly managed.

For example, in case that the uplink beam and the downlink beam are separated from each other, the uplink beam information is not related to the downlink beam information each other, the beam for the FLB is determined using the first uplink beam information for the FLB in uplink transmission, the beam for the FLB is determined using the first downlink beam information for the FLB in downlink transmission, where the first uplink beam information refers to the first beam information corresponding to an uplink direction, and the first downlink beam information refers to the first beam information corresponding to a downlink direction.

In a possible embodiment, the first uplink beam information may be separate UL, which is used to indicate a separate uplink TCI state.

In a possible embodiment, the first downlink beam information may be separate DL, which is used to indicate a separate downlink TCI state.

In a possible embodiment, the first uplink beam information and the first downlink beam information may be one piece of information, for example, separate ULDL, which is used to indicate a separate uplink and downlink TCI state.

For example, in case that an uplink beam and a downlink beam are jointly managed, the uplink beam and the downlink beam for the FLB are determined using the first joint uplink and downlink beam information, the first joint uplink and downlink beam information includes both uplink beam information and downlink beam information. The network device or the NCR may pre-set association information of the uplink beam and the downlink beam, each uplink beam has a corresponding downlink beam, and the uplink beam is in is in one-to-one correspondence with the downlink beam. The first joint uplink and downlink beam information refers to the first beam information including joint information of the uplink beam and the downlink beam.

In a possible embodiment, the first joint uplink and downlink beam information may be joint ULDL, which is used to indicate a joint uplink downlink TCI state.

In an embodiment, the method further includes:

receiving first parameter information sent from the network control repeater, where the first parameter information is used to indicate whether the network control repeater supports the joint uplink beam and downlink beam management; and/or

sending second parameter information to the network control repeater, where the second parameter information is used to indicate whether the network control repeater performs the joint uplink beam and downlink beam management.

In an embodiment of the present application, the NCR may report information of whether supporting joint uplink beam and downlink beam management to the network device, or the network device may indicate the NCR whether to perform joint uplink beam and downlink beam management through parameter configuration.

For example, the NCR may report whether supporting joint uplink beam and downlink beam management through a RRC parameter (such as BeamType or TCI-StateType). If the NCR supports, the parameter is configured as 1, and if the NCR does not support, the parameter is configured as 0.

For example, the network device may configure whether to perform joint uplink beam and downlink beam management through an RRC parameter (such as BeamType or TCI-StateType). If the joint uplink beam and downlink beam management is performed, the parameter is configured as 1, and if the joint uplink beam and downlink beam management is not performed, the parameter is configured as 0.

In an embodiment, the method further includes: sending third parameter information to the network control repeater, where the third parameter information is used to indicate whether the network control repeater uses the unified beam indication information for the backhaul link.

Specifically, the network device may indicate whether the NCR determines the beam for the FLB using unified beam indication information through a configuration parameter.

For example, the network device may send a RRC parameter followUnifiedTCIstate_FLB to the NCR. In case that followUnifiedTCIstate_FLB is configured to enable. In case that the unified beam indication information is received and the effective timing of beam information for the FLB arrives, the unified beam indication information may be used to determine the beam for the FLB.

In case that followUnifiedTCIstate_FLB is configured to unable, the unified beam indication information is not used to determine the beam for the FLB. For example, at this time, the FLB may use a default beam direction or a beam direction determined based on the polling rule or a beam direction indicated by the network device.

The methods provided by the embodiments of the present application are based on the same application concept, the implementation of each method may refer to each other, and the repetition will not be repeated.

The methods provided by the above embodiments of the present application are illustrated below by examples under specific application scenarios.

Embodiment 1: method flow of separate uplink beam and downlink beam indication + no timer

FIG. 5 is a first schematic diagram of implementing a method for determining beam for FLB according to an embodiment of the present application. FIG. 5 shows the method for determining beam for FLB in two different modes: FDM and TDM. In the figure, the effective timing of the beam information for an FLB is a start timing of a transmission slot for the C-link. Other methods for determining the effective timing of the beam information for the FLB are described in embodiment 5. In case that there is no reference beam information (i.e., the beam information for the C-link, which will not be repeated later), a default beam (or the beam determined by the polling rule or the beam indicated by the base station or no transmission or reception) is used, where different patterns represent different beam directions.

Step 1: if the FLB works in case of no reference beam information, the system pre-sets a default beam direction (or a beam direction determined by the polling rule or a beam direction indicated by the base station). The FLB uses a default uplink (downlink) beam direction (or determined by the polling rule or indicated by the base station) as the transmission (reception) beam direction before the C-link establishes a connection.

If the FLB does not work without reference beam information, the FLB does not send or receive before the C-link establishes a connection.

Step 2: after the C-link establishes a connection, an NCR performs beam measurement and management on the C-link. A beam management procedure may adopt traditional technologies. For example, the base station uses different beams to send a measurement signal to the NCR through the C-link. After receiving the measurement signal, the NCR calculates a measurement value (such as received power, etc.). After comparison, the C-link reports the measurement value or optimal beam information. Beam management is performed on uplink and downlink beams respectively.

Step 3: after receiving the measurement value or optimal beam information reported by the C-link, the base station sends the beam information A-UL (uplink)/A-DL (downlink) for the C-link through DCI.

Step 4: if the NCR does not detect the beam information A-UL/A-DL, the NCR still determines the beam direction for the FLB or does not send or receive based on the method of step 1; and if the NCR receives and detects the beam information A-UL/A-DL, the NCR uses the beam information A-UL/A-DL as the uplink/-downlink beam for FLB in case that a corresponding effective timing of the beam information for the FLB arrives.

Embodiment 2: method flow of joint indication of uplink beam and downlink beam + no timer

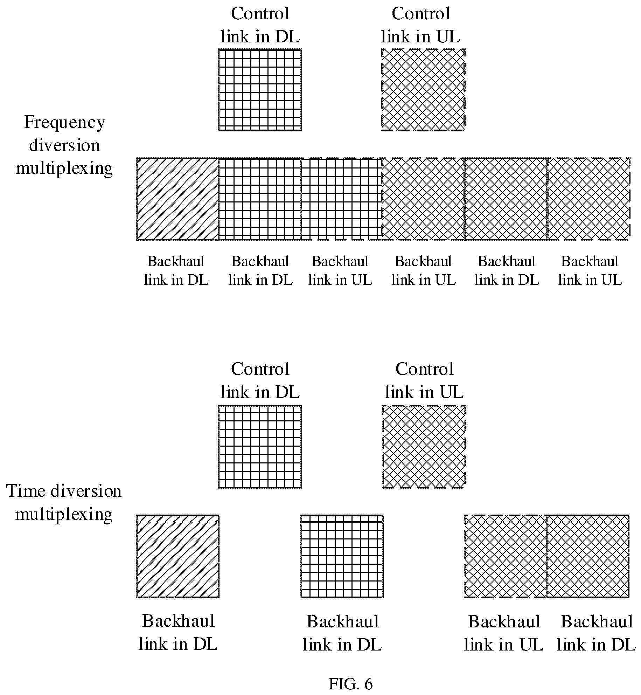

FIG. 6 is a second schematic diagram of implementing a method for determining beam for FLB according to an embodiment of the present application. FIG. 6 shows the method for determining beam for FLB in two different modes: FDM and TDM. In the figure, the effective timing of the beam information for an FLB is a start timing of a transmission slot for the C-link. Other methods for determining the effective timing of the beam information for the FLB are described in embodiment 5. A default beam (or the beam determined by the polling rule or the beam indicated by the base station or no transmission or reception) is used in case that there is no reference beam information, where different patterns represent different beam directions, and different borders (solid lines and dashed lines) of the same pattern represent a set of corresponding beam directions.

Step 1: a base station or an NCR pre-sets association information of an uplink beam and a downlink beam. Each uplink transmission beam has a corresponding downlink reception beam, and each uplink transmission beam is in one-to-one correspondence with each downlink reception beam.

Step 2: if the FLB works in case of no reference beam information, the system pre-sets the default beam direction (or determined by the polling rule or indicated by the base station). The FLB uses default association information of the uplink beam and the downlink beam (or determined by the polling rule or indicated by the base station) as the transmission (reception) beam direction before the C-link establishes a connection.

If the FLB does not work without reference beam information, the FLB does not send or receive before the C-link establishes a connection.

Step 3: after the C-link establishes a connection, the NCR performs beam measurement and management on the C-link. The beam management procedure may adopt traditional technologies. For example, the base station uses different beams to send a measurement signal to the NCR through the C-link. After receiving the measurement signal, the NCR calculates a measurement value (such as received power, etc.). After comparison, the C-link reports the measurement value or optimal beam information. Beam management is performed on uplink and downlink beams jointly.

Step 4: after receiving the measurement value or optimal beam information reported by the C-link, the base station sends joint uplink and downlink beam information A for the C-link through DCI.

Step 5: if the NCR does not detect the beam information A, the NCR still determines the beam direction for the FLB or does not send or receive based on the method of step 1; and if the NCR receives and detects the joint uplink and downlink beam information A, the NCR uses the beam information A as the uplink/downlink beam for the FLB in case that a corresponding effective timing of the beam information for the FLB arrives.

Embodiment 3: method flow of separate uplink beam and downlink beam indication + a timer

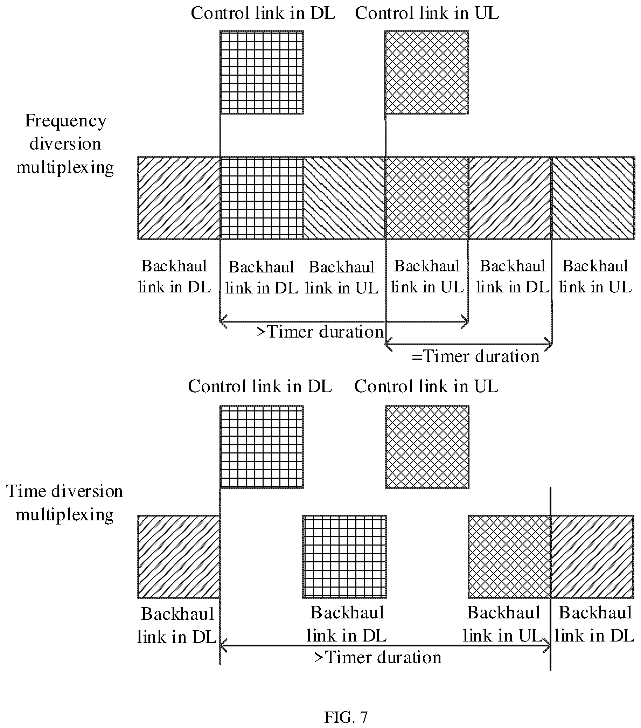

FIG. 7 is a third schematic diagram of implementing a method for determining beam for FLB according to an embodiment of the present application. FIG. 7 shows the method for determining beam for FLB in two different modes: FDM and TDM. A start point of the timer in FIG.7 is a start timing of the transmission slot for the C-link. Other methods for determining the effective timing of the beam information for an FLB are described in embodiment 5. In case that there is no reference beam information, a default beam (or the beam determined by the polling rule or the beam indicated by the base station or no transmission or reception) is used, where different patterns represent different beam directions.

Step 1: if the FLB works in case of no reference beam information, the system pre-sets a default beam direction (or a beam direction determined by the polling rule or a beam direction indicated by the base station). The FLB uses a default uplink (downlink) beam direction (or determined by the polling rule or indicated by the base station) as the transmission (reception) beam direction before the C-link establishes a connection.

If the FLB does not work without reference beam information, the FLB does not send or receive before the C-link establishes a connection.

Step 2: the base station indicates a duration of a QCLtimer. Specific methods, can be referred to embodiments 6 and 7.

Step 3: the base station determines default or specified beam information B-UL (uplink)/B-DL (downlink) for the FLB.

Step 4: after the C-link establishes a connection, an NCR performs beam measurement and management on the C-link. A beam management procedure may adopt traditional technologies. For example, the base station uses different beams to send a measurement signal to the NCR through the C-link. After receiving the measurement signal, the NCR calculates a measurement value (such as received power, etc.). After comparison, the C-link reports the measurement value or optimal beam information. Beam management is performed on uplink and downlink beams respectively.

Step 5: after receiving the measurement value or optimal beam information reported by the C-link, the base station sends the beam information A-UL/A-DL for the C-link through DCI.

Step 6: if the NCR does not detect the beam information A-UL/A-DL, the NCR still determines the beam direction for the FLB or does not send or receive based on the method of step 1; and if the NCR receives and detects the beam information A-UL/A-DL, and the QCLtimer is set to zero and the timing is started, the NCR uses the beam information A-UL/A-DL as the uplink/-downlink beam of the FLB in case that the start point of the QCLtimer arrives. In case that the QCLtimer reaches a given duration, the NCR uses the beam information B-UL/B-DL as the uplink/downlink beam for the FLB.

Embodiment 4: method flow of joint indication of uplink beam and downlink beam + a timer

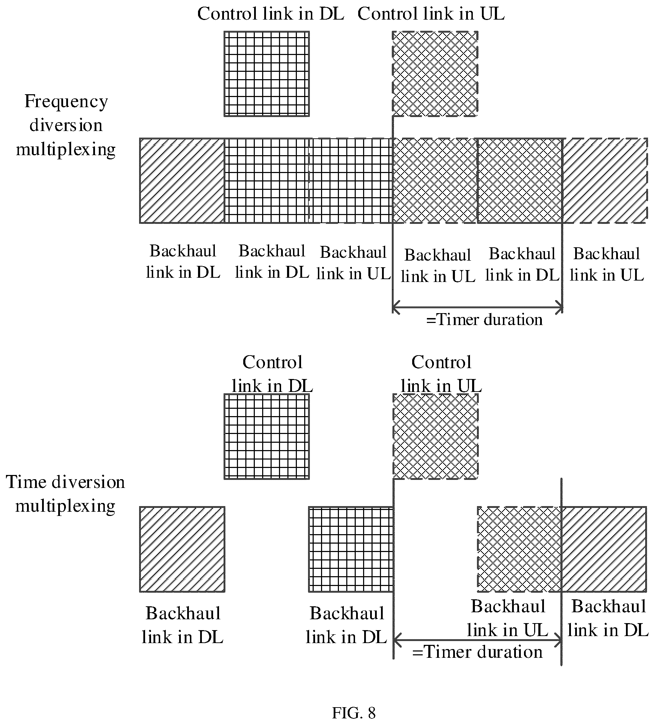

FIG. 8 is a fourth schematic diagram of implementing a method for determining beam for FLB according to an embodiment of the present application. FIG. 8 shows the method for determining beam for FLB in two different modes, FDM and TDM. As shown in FIG. 8, a start point of the timer in FIG.7 is a start timing of the transmission slot for the C-link. Other methods for determining the effective timing of the beam information for an FLB are described in embodiment 5. A default beam (or the beam determined by the polling rule or the beam indicated by the base station or no transmission or reception) is used in case that there is no reference beam information, where different patterns represent different beam directions, and different borders (solid lines and dashed lines) of the same pattern represent a set of corresponding beam directions.

Step 1: a base station or an NCR pre-sets association information of an uplink beam and a downlink beam. Each uplink transmission beam has a corresponding downlink reception beam, and each uplink transmission beam is in one-to-one correspondence with each downlink reception beam.

Step 2: if the FLB works in case of no reference beam information, the system pre-sets the default beam direction (or determined by the polling rule or indicated by the base station). The FLB uses default association information of the uplink beam and the downlink beam (or determined by the polling rule or indicated by the base station) as the transmission (reception) beam direction before the C-link establishes a connection.

If the FLB does not work without reference beam information, the FLB does not send or receive before the C-link establishes a connection.

Step 3: the base station determines a duration of a QCLtimer. Specific methods can be referred to embodiments 6 and 7.

Step 4: the base station determines default or specified beam information B for the FLB.

Step 5: after the C-link establishes a connection, the NCR performs beam measurement and management on the C-link. A beam management procedure may adopt traditional technologies. For example, the base station uses different beams to send a measurement signal to the NCR through the C-link. After receiving the measurement signal, the NCR calculates a measurement value (such as received power, etc.). After comparison, the C-link reports the measurement value or optimal beam information. Beam management is performed on uplink and downlink beams jointly.

Step 6: after receiving the measurement value or optimal beam information reported by the C-link, the base station sends the beam information B for the C-link through DCI.

Step 7: if the NCR does not detect the beam information B, the NCR still determines the beam direction for the FLB or does not send or receive based on the method of step 1; and if the NCR receives and detects the beam information B, and the QCLtimer is set to zero and the timing is started, the NCR uses the beam information B as the uplink/downlink beam of the FLB in case that the start point of the QCLtimer arrives. In case that the QCLtimer reaches a given duration, the NCR uses the beam information B as the uplink/downlink beam for the FLB.

Embodiment 5: calculation method flow of effective timing (or a start point of the timer) of beam information for the FLB.

As shown in FIG. 3, it is assumed that an index of a slot where the base station sends the DCI (SCI) is n, and an index of a transmission or reception slot for the C-link is m, the effective timing (or a start point of a timer) of the beam information for the FLB is determined using the following different methods.

(1) A start symbol of a first slot after the control signaling being effective is taken as a determined effective timing (or a start point of a timer) of the beam information for the FLB. A slot index of the effective timing (or a start point of a timer) of the beam for the FLB is $n + \left\lceil \dfrac{timeDurationForQCL}{slot\_time} \right\rceil$, which

may also be expressed as $\left\lceil n + \dfrac{timeDurationForQCL}{slot\_time} \right\rceil$, where *timeDurationForQCL* (quasi-co-location duration) is a timing required for the first control signaling sent from the network device to be effective, which is related to capabilities of a user. *slot_time* is a duration of one slot.

*timeDurationForQCL* may be a set pre-specified by the network device, and elements in the set represent a quantity of OFDM symbols. A user equipment (UE) reports index values of the elements in the set based on its own capability.

(2) A start timing of a transmission slot for the C-link is taken as the determined effective timing (or a start point of a timer) of the beam for the FLB and a slot index of the effective timing (or a start point of a timer) of the beam for the FLB is m.

(3) A start timing of a next slot counting from a transmission slot for the C-link is taken as the determined effective timing (or a start point of a timer) of the beam for the FLB and a slot index of the effective timing (or a start point of a timer) of the beam for the FLB is (m+1).

Embodiment 6: method flow for duration of a timer indicated by a higher layer parameter.

Step 1: a base station pre-configures an available duration set of a QCLtimer through a parameter LengthOfQCLtimer of the RRC layer. The set may be determined by an enumeration way, and may be configured based on the actual duration or a quantity of symbols, such as {5 ms, 10 ms, 20 ms, 40 ms, 80 ms} or {7, 14, 28}. The set may also be determined by configuring a minimum value, a maximum value and a granularity, such as MinLengthOfQCLtimer=5 ms, MaxLengthOfQCLtimer=80 ms, and a default granularity of a system is 5 ms.

Step 2: the base station indicates an index in the available duration set of a QCLtimer to the NCR through RRC or SCI.

Step 3: after receiving a value of the index, an NCR determines the duration of a QCLtimer.

Embodiment 7: method flow for determining a duration of a timer by an NCR reporting method.

Step 1: a base station pre-configures an available duration set of a QCLtimer through a parameter LengthOfQCLtimer of the RRC layer. The set may be determined by an enumeration way, and may be configured based on the actual duration or a quantity of symbols, such as {5ms, 10ms, 20ms, 40ms, 80ms} or {7, 14, 28}; the set may also be determined by configuring the minimum value, maximum value and a granularity, such as MinLengthOfQCLtimer = 5ms, MaxLengthOfQCLtimer=80ms, and the default granularity of a system is 5ms.

Step 2: the NCR indicates an index in the available duration set of a QCLtimer to the NCR through the RRC or the SCI based on its own capability.

Step 3: after receiving a value of the index, the base station adjusts the duration of a QCLtimer, and indicates an index of the adjusted QCLtimer in the available duration set of the QCLtimer to the NCR through the RRC or the SCI.

Step 4: after receiving a value of the index, the NCR determines the duration of a QCLtimer.

Embodiment 8: method for determining uplink beam and downlink beam indication ways.

Indication way for the uplink beam and downlink beam may include either separate uplink beam and downlink beam indication or a joint uplink beam and downlink beam indication, which may be default by the system, or configured through parameters, or may be reported based on the NCR's capability.

(1) Configured by a parameter: the network device may configure whether to perform joint uplink beam and downlink beam management through an RRC parameter (such as BeamType or TCI-StateType). If the joint uplink beam and downlink beam management is performed, the parameter is configured as 1, and if the joint uplink beam and downlink beam management is not performed, the parameter is configured as 0.

(2) Reported based on the NCR's capability: the NCR reports whether to support joint uplink beam and downlink beam management through an RRC parameter (such as BeamType or TCI-StateType). If the NCR supports, the parameter is configured as 1, and if the NCR does not support, the parameter is configured as 0.

Embodiment 9: method flow for configuring, by the NCR, unified beam indication information UnifiedTCIstate

Step 1: if an FLB works in case that UnifiedTCIstate is unable to be used, the system pre-sets a default beam direction (or determined by the polling rule or indicated by the base station). The FLB uses a default beam direction (or determined by the polling rule or indicated by the base station) as the beam direction before the C-link establishes a connection.

If the FLB does not work in case that UnifiedTCIstate is unable to be used, the FLB does not send or receive before the C-link establishes a connection.

Step 2: after the C-link establishes a connection, an NCR performs beam measurement and management on the C-link. A beam management procedure may adopt traditional technologies. For example, the base station uses different beams to send a measurement signal to the NCR through the C-link. After receiving the measurement signal, the NCR calculates a measurement value (such as received power, etc.). After comparison, the C-link reports the measurement value or optimal beam information.

Step 3: after receiving the measurement value or optimal beam information reported by the C-link, the base station sends the unified beam indication information UnifiedTCIstate through DCI.

Step 4: the NCR receives the RRC parameter followUnifiedTCIstate_FLB.

In case that followUnifiedTCIstate_FLB is configured as enable, in case that UnifiedTCIstate information is received and the effective timing of the beam information for the FLB arrives, the FLB uses UnifiedTCIstate information, otherwise operations are performed based on the step 1.

In case that followUnifiedTCIstate_FLB is configured as unable, operations are performed based on the step 1.

In case that NCR does not detect UnifiedTCIstate information, operations are performed based on the step 1.

The methods and the apparatuses are based on the same application concept, the implementation of the apparatuses and the methods can be referred to each other since the principles of the methods and the apparatuses are similar, and the repetition will not be repeated.

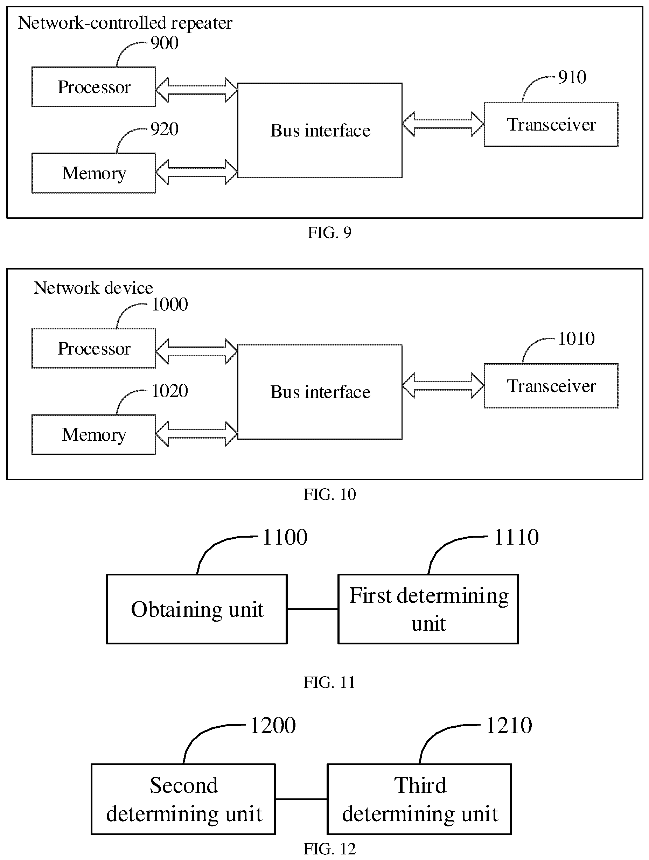

FIG. 9 is a schematic structural diagram of a network control repeater according to an embodiment of the present application. As shown in FIG. 9, the network control repeater includes a memory 920, a transceiver 910, and a processor 900, where the processor 900 and the memory 920 may also be arranged physically separately.

The memory 920 is used for a storing computer program, and the transceiver 910 is used for receiving and transmitting data under control of the processor 900.

The transceiver 910 is used for receiving and transmitting data under the control of the processor 900.

In FIG. 9, a bus architecture may include any number of interconnected buses and bridges, which are linked together through various circuits of one or more processors represented by processor 900 and one or more memories represented by the memory 920. The bus architecture may also link together various other circuits, such as peripherals, voltage regulators, and power management circuits, which are well known in the art, and therefore will not be further described in the present application. The bus interface provides an interface. The transceiver 910 may be multiple elements, i.e., including a transmitter and a receiver, units for providing communication with various other devices over transmission media including wireless channels, wired channels, fiber optic cables, and the like.

The processor 900 is responsible for managing the bus architecture and general processing, and the memory 920 may store data used by the processor 900 when performing operations.

The processor 900 may be a central processing unit (CPU), an application specific integrated circuit (ASIC), a field-programmable gate array (FPGA), or a complex programmable logic device (CPLD), the processor can also use a multi-core architecture.

The processor 900 is configured to perform any one of the methods of the embodiments of the present application when executing an obtained executable instruction by calling the computer program stored in the memory 920. The method includes: obtaining first beam information, where the first beam information includes beam information for a control link or unified beam indication information; and determining a beam for a backhaul link based on the first beam information;

or, obtaining second beam information, where the second beam information is default configured beam information for a backhaul link, or beam information for a backhaul link indicated by a network device, or beam information for a backhaul link determined based on a predefined rule; and determining a beam for the backhaul link based on the second beam information.

In an embodiment, determining the beam for the backhaul link based on the first beam information includes:

determining the beam for the backhaul link based on most recently received first beam information.

In an embodiment, determining the beam for the backhaul link based on the most recently received first beam information includes:

determining the beam for the backhaul link based on the most recently received first beam information starting from a first timing,

where a way for determining the first timing includes:

taking a start symbol of a first slot after a first control signaling being effective as the first timing; or

taking a start symbol of a transmission slot for a control link indicated by a first control signaling as the first timing; or

taking a start symbol of a next slot counting from a transmission slot for a control link indicated by a first control signaling as the first timing;

where the first control signaling is a control signaling indicating the most recently received first beam information.

In an embodiment, determining the beam for the backhaul link based on the most recently received first beam information includes:

in case that a first timer does not expire, determining the beam for the backhaul link based on the most recently received first beam information,

where the first timer starts at the first timing.

In an embodiment, the method further includes: in case that the first beam information is unable to be used, performing any one of the following operations:

determining the beam for the backhaul link based on default configured beam information;

determining the beam for the backhaul link based on a given beam set and a polling rule;

determining the beam for the backhaul link based on beam information for the backhaul link indicated by a network device; or

not performing data transmission and/or data reception in a backhaul link.

In an embodiment, determining the beam for the backhaul link based on the first beam information includes any one of the following:

in case that an uplink beam and a downlink beam are separated from each other, determining an uplink beam for the backhaul link based on first uplink beam information; and/or, determining a downlink beam for the backhaul link based on first downlink beam information; or

in case that an uplink beam and a downlink beam are jointly managed, determining an uplink beam for the backhaul link and a downlink beam for the backhaul link based on first joint uplink and downlink beam information.

In an embodiment, the method further includes:

sending first parameter information to the network device, where the first parameter information is used to indicate whether a network control repeater supports the joint uplink beam and downlink beam management; and/or,

receiving second parameter information sent from the network device, where the second parameter information is used to indicate whether the network control repeater performs the joint uplink beam and downlink beam management.

In an embodiment, the method further includes:

sending first indication information to the network device, where the first indication information is used to indicate an index of a duration of the first timer in a timer duration set; and/or

receiving second indication information sent from the network device, where the second indication information is used to indicate an index of a duration of the first timer in a timer duration set.

In an embodiment, the timer duration set is determined based on enumerated duration values or a quantity of symbols; or, the timer duration set is determined based on one or more of a configured minimum duration value, a configured maximum duration value, or a configured granularity.

In an embodiment, the method further includes: receiving third parameter information sent from the network device, where the third parameter information is used to indicate whether the network control repeater uses the unified beam indication information for the backhaul link.

In an embodiment, the first beam information includes one or more of the following:

a beam index;

an index of a reference signal resource for measurement; or

a time domain resource location using the first beam information.

FIG. 10 is a schematic structural diagram of a network device according to an embodiment of the present application. As shown in FIG. 10, the network device includes a memory 1020, a transceiver 1010, and a processor 1000, where the processor 1000 and the memory 1020 may also be arranged physically separately.

The memory 1020 is used for storing a computer program, and the transceiver 1010 is used for receiving and transmitting data under control of the processor 1000.

The transceiver 1010 is used for receiving and transmitting data under the control of the processor 1000.

In FIG. 10, a bus architecture may include any number of interconnected buses and bridges, which are linked together through various circuits of one or more processors represented by processor 1000 and one or more memories represented by the memory 1020. The bus architecture may also link together various other circuits, such as peripherals, voltage regulators, and power management circuits, which are well known in the art, and therefore will not be further described in the present application. The bus interface provides an interface. The transceiver 1010 may be multiple elements, i.e., including a transmitter and a receiver, units for providing communication with various other devices over transmission media including wireless channels, wired channels, fiber optic cables, and the like.

The processor 1000 is responsible for managing the bus architecture and general processing, and the memory 1020 may store data used by the processor 1000 when performing operations.

The processor 1000 may be a CPU, ASIC, FPGA or CPLD, and the processor may also use a multi-core architecture.

The processor 1000 is configured to perform any one of the methods of the embodiments of the present application when executing an obtained executable instruction by calling the computer program stored in the memory 1020. The method includes: determining first beam information, where the first beam information includes beam information corresponding to a control link between a network control repeater and the network device, or unified beam indication information corresponding to a network control repeater; and determining a beam for a backhaul link between the network control repeater based on the first beam information;

or, determining second beam information, where the second beam information is default configured beam information for a backhaul link, or beam information for a backhaul link indicated by a network device to a network control repeater, or beam information for a backhaul link determined based on a predefined rule; and determining the beam for the backhaul link based on the second beam information.

In an embodiment, determining the beam for the backhaul link between the network control repeater based on the first beam information includes:

determining the beam for the backhaul link based on most recently sent first beam information.

In an embodiment, determining the beam for the backhaul link based on the most recently sent first beam information includes:

determining the beam for the backhaul link based on most recently sent first beam information starting from a first timing,

where a way for determining the first timing includes:

taking a start symbol of a first slot after a first control signaling being effective as the first timing; or

taking a start symbol of a transmission slot for a control link indicated by a first control signaling as the first timing; or

taking a start symbol of a next slot counting from a transmission slot for a control link indicated by a first control signaling as the first timing;

where the first control signaling is a control signaling indicating the most recently sent first beam information.

In an embodiment, determining the beam for the backhaul link based on the most recently sent first beam information includes:

in case that a first timer does not expire, determining the beam for the backhaul link based on the most recently sent first beam information,

where the first timer starts at the first timing.

In an embodiment, the method further includes: in case of determining that the network control repeater is unable to use the first beam information, performing any one of the following operations:

determining the beam for the backhaul link based on default configured beam information;

determining the beam for the backhaul link based on a given beam set and a polling rule;

determining the beam for the backhaul link based on beam information for the backhaul link indicated by a network device; or

not performing data transmission and/or data reception in a backhaul link.

In an embodiment, determining the beam for the backhaul link between the network control repeater based on the first beam information includes any one of the following:

in case that an uplink beam and a downlink beam are separated from each other, determining an uplink beam for the backhaul link based on first uplink beam information; and/or, determining a downlink beam for the backhaul link based on first downlink beam information; or

in case that an uplink beam and a downlink beam are jointly managed, determining an uplink beam for the backhaul link and a downlink beam for the backhaul link based on first joint uplink and downlink beam information.

In an embodiment, the method further includes:

receiving first parameter information sent from the network control repeater, where the first parameter information is used to indicate whether the network control repeater supports the joint uplink beam and downlink beam management; and/or

sending second parameter information to the network control repeater, where the second parameter information is used to indicate whether the network control repeater performs the joint uplink beam and downlink beam management.

In an embodiment, the method further includes:

receiving first indication information sent from the network control repeater, where the first indication information is used to indicate an index of a duration of the first timer in a timer duration set; and/or

sending second indication information to the network control repeater, where the second indication information is used to indicate an index of a duration of the first timer in a timer duration set.

In an embodiment, the timer duration set is determined based on enumerated duration values or a quantity of symbols; or, the timer duration set is determined based on one or more of a configured minimum duration value, a configured maximum duration value, or a configured granularity.

In an embodiment, the method further includes: sending third parameter information to the network control repeater, where the third parameter information is used to indicate whether the network control repeater uses the unified beam indication information for the backhaul link.

In an embodiment, the first beam information includes one or more of the following:

a beam index;

an index of a reference signal resource for measurement; or

a time domain resource location using the first beam information.

It should be noted here that the above-mentioned network control repeater and the network device according to the embodiments of the present application may implement all the method steps implemented by the above-mentioned method embodiments, and can achieve the same effect. The same parts and beneficial effects as the same method embodiments will not be repeated here.

FIG. 11 is a first schematic structural diagram of an apparatus for determining beam for backhaul link according to an embodiment of the present application. The apparatus is for use in a network control repeater. As shown in FIG. 11, the apparatus includes:

an obtaining unit 1100, used for obtaining first beam information, where the first beam information includes beam information for a control link or unified beam indication information; and

a first determining unit 1110, used for determining a beam for a backhaul link based on the first beam information;

or

an obtaining unit 1100, used for obtaining second beam information, where the second beam information is default configured beam information for a backhaul link, or beam information for a backhaul link indicated by a network device, or beam information for a backhaul link determined based on a predefined rule; and

a first determining unit 1110, used for determining a beam for the backhaul link based on the second beam information.

In an embodiment, determining the beam for the backhaul link based on the first beam information includes:
determining the beam for the backhaul link based on most recently received first beam information.

In an embodiment, determining the beam for the backhaul link based on the most recently received first beam information includes:

determining the beam for the backhaul link based on the most recently received first beam information starting from a first timing,

where a way for determining the first timing includes:

taking a start symbol of a first slot after a first control signaling being effective as the first timing; or

taking a start symbol of a transmission slot for a control link indicated by a first control signaling as the first timing; or

taking a start symbol of a next slot counting from a transmission slot for a control link indicated by a first control signaling as the first timing;

where the first control signaling is a control signaling indicating the most recently received first beam information.

In an embodiment, determining the beam for the backhaul link based on the most recently received first beam information includes:

in case that a first timer does not expire, determining the beam for the backhaul link based on the most recently received first beam information,

where the first timer starts at the first timing.

In an embodiment, the first determining unit 1110 is further used for:
in case that the first beam information is unable to be used, performing any one of the following operations:

determining the beam for the backhaul link based on default configured beam information;

determining the beam for the backhaul link based on a given beam set and a polling rule;

determining the beam for the backhaul link based on beam information for the backhaul link indicated by a network device; or

not performing data transmission and/or data reception in a backhaul link.

In an embodiment, determining the beam for the backhaul link based on the first beam information includes any one of the following:

in case that an uplink beam and a downlink beam are separated from each other, determining an uplink beam for the backhaul link based on first uplink beam information; and/or, determining a downlink beam for the backhaul link based on first downlink beam information; or

in case that an uplink beam and a downlink beam are jointly managed, determining an uplink beam for the backhaul link and a downlink beam for the backhaul link based on first joint uplink and downlink beam information.

In an embodiment, the apparatus further includes a first transmitting unit, used for:

sending first parameter information to the network device, where the first parameter information is used to indicate whether a network control repeater supports the joint uplink beam and downlink beam management; and/or

receiving second parameter information sent from the network device, where the second parameter information is used to indicate whether the network control repeater performs the joint uplink beam and downlink beam management.

In an embodiment, the apparatus further includes a second transmitting unit, used for:

sending first indication information to the network device, where the first indication information is used to indicate an index of a duration of the first timer in a timer duration set; and/or

receiving second indication information sent from the network device, where the second indication information is used to indicate an index of a duration of the first timer in a timer duration set.

In an embodiment, the timer duration set is determined based on enumerated duration values or a quantity of symbols; or, the timer duration set is determined based on one or more of a configured minimum duration value, a configured maximum duration value, or a configured granularity.

In an embodiment, the apparatus further includes a third transmitting unit, used for:
receiving third parameter information sent from the network device, where the third parameter information is used to indicate whether the network control repeater uses the unified beam indication information for the backhaul link.

In an embodiment, the first beam information includes one or more of the following:

a beam index;

an index of a reference signal resource for measurement; or

a time domain resource location using the first beam information.

FIG. 12 is a second schematic structural diagram of an apparatus for determining beam for backhaul link according to an embodiment of the present application. The apparatus is for use in a network device. As shown in FIG. 12, the apparatus includes:

a second determining unit 1200, used for determining first beam information, where the first beam information includes beam information corresponding to a control link between a network control repeater and the network device, or unified beam indication information corresponding to a network control repeater; and

a third determining unit 1210, used for determining a beam for a backhaul link between the network control repeater based on the first beam information;

or

a second determining unit 1200, used for determining second beam information, where the second beam information is default configured beam information for a backhaul link, or beam information for a backhaul link indicated by the network device to a network control repeater (NCR), or beam information for the backhaul link determined based on a predefined rule; and

a third determining unit 1210, used for determining the beam for the backhaul link based on the second beam information.

In an embodiment, determining the beam for the backhaul link between the network control repeater based on the first beam information includes: determining the beam for the backhaul link based on most recently sent first beam information.

In an embodiment, determining the beam for the backhaul link based on the most recently sent first beam information includes:

determining the beam for the backhaul link based on most recently sent first beam information starting from a first timing,

where a way for determining the first timing includes:

taking a start symbol of a first slot after a first control signaling being effective as the first timing; or

taking a start symbol of a transmission slot for a control link indicated by a first control signaling as the first timing; or

taking a start symbol of a next slot counting from a transmission slot for a control link indicated by a first control signaling as the first timing;

where the first control signaling is a control signaling indicating the most recently sent first beam information.

In an embodiment, determining the beam for the backhaul link based on the most recently sent first beam information includes:

in case that a first timer does not expire, determining the beam for the backhaul link based on the most recently sent first beam information,

where the first timer starts at the first timing.

In an embodiment, the third determining unit 1210 is further used for: in case of determining that the network control repeater is unable to use the first beam information, performing any one of the following operations:

determining the beam for the backhaul link based on default configured beam information;

determining the beam for the backhaul link based on a given beam set and a polling rule;

determining the beam for the backhaul link based on beam information for the backhaul link indicated by a network device; or

not performing data transmission and/or data reception in a backhaul link.

In an embodiment, determining the beam for the backhaul link between the network control repeater based on the first beam information includes any one of the following:

in case that an uplink beam and a downlink beam are separated from each other, determining an uplink beam for the backhaul link based on first uplink beam information; and/or, determining a downlink beam for the backhaul link based on first downlink beam information; or

in case that an uplink beam and a downlink beam are jointly managed, determining an uplink beam for the backhaul link and a downlink beam for the backhaul link based on first joint uplink and downlink beam information.

In an embodiment, the apparatus further includes a fourth transmitting unit, used for:

receiving first parameter information sent from the network control repeater, where the first parameter information is used to indicate whether the network control repeater supports the joint uplink beam and downlink beam management; and/or

sending second parameter information to the network control repeater, where the second parameter information is used to indicate whether the network control repeater performs the joint uplink beam and downlink beam management.

In an embodiment, the apparatus further includes a fifth transmitting unit, used for:

receiving first indication information sent from the network control repeater, where the first indication information is used to indicate an index of a duration of the first timer in a timer duration set; and/or,

sending second indication information to the network control repeater, where the second indication information is used to indicate an index of a duration of the first timer in a timer duration set.

In an embodiment, the timer duration set is determined based on enumerated duration values or a quantity of symbols; or, the timer duration set is determined based on one or more of a configured minimum duration value, a configured maximum duration value, or a configured granularity.

In an embodiment, the apparatus further includes a sixth transmitting unit, used for: sending third parameter information to the network control repeater, where the third parameter information is used to indicate whether the network control repeater uses the unified beam indication information for the backhaul link.

In an embodiment, the first beam information includes one or more of the following:

a beam index;

an index of a reference signal resource for measurement; or

a time domain resource location using the first beam information.

It should be noted that, the division of units in the embodiments of the present application is schematic, and is only a logical function division, and there may be other division manners in actual implementation. In addition, the functional units in the various embodiments of the present application may be integrated into one processing unit, or each unit may exist alone physically, or two or more units may be integrated into one unit. The above-mentioned integrated unit may be implemented in the form of hardware or software functional unit.

If the integrated unit is implemented in the form of a software functional unit and sold or used as a separate product, it may be stored in a computer readable storage medium. Based on such understanding, the technical solutions of the present application in essence or a part of the technical solutions that contributes to the prior art, or all or part of the technical solutions, may be embodied in the form of a software product, which is stored in a storage medium, including several instructions to cause a computer device (which may be a personal computer, server, or network device, etc.) or a processor to perform all or part of the steps of the methods described in the respective embodiments of the present application. The storage medium described above includes various media that may store program codes such as U disk, mobile hard disk, read-only memory (ROM), random access memory (RAM), magnetic disk, or a compact disk.

It should be noted here that the above-mentioned apparatuses according to the embodiments of the present application can implement all the method steps implemented by the above-mentioned method embodiments, and can achieve the same effect. The same parts and beneficial effects as the same method embodiments will not be repeated here.

An embodiment of the present application further provides a computer-readable storage medium storing a computer program that causes a computer to perform methods for determining beam for backhaul link provided by the above embodiments.

It should be noted here that the above-mentioned computer-readable storage medium provided by the embodiments of the present application may implement all the method steps implemented by the above-mentioned method embodiments, and can achieve the same effect. The same parts and beneficial effects as the same method embodiments will not be repeated here.

The computer-readable storage medium may be any available medium or data storage device that can be accessed by the computer, including but not limited to, a magnetic storage (e.g., a floppy disk, a hard disk, a magnetic tape, a magneto-optical disk (MO), etc.), optical memory (such as CD, DVD, BD, HVD, etc.), and a semiconductor memory (such as ROM, EPROM, EEPROM, non-volatile memory (NAND FLASH), solid-state drive (SSD)), etc.

The solutions according to the embodiments of the present application may be applicable to various systems, especially 5G systems. For example, applicable systems may be a global system of mobile communication (GSM) system, a code division multiple access (CDMA) system, a wideband code division multiple access (WCDMA) general packet wireless service (general packet radio service, GPRS) system, a long term evolution (LTE) system, a LTE frequency division duplex (FDD) system, a LTE time division duplex (TDD) system, a long term evolution advanced (LTE-A) system, a universal mobile telecommunication system (UMTS), a worldwide interoperability for microwave access (WiMAX) system, a 5G New Radio (NR) system, etc. These various systems include a terminal device and a network device. The system may also include a core network part, such as an evolved packet system (EPS), a 5G system (5GS), and the like.

The network device involved in the embodiments of the present application may be a base station, and the base station may include a plurality of cells providing services for the terminal. Depending on the specific application, the network device may also be called an access point, or may be a device in the access network that communicates with wireless terminal device through one or more sectors on the air interface, or other names. The network device can be used to exchange received air frames with Internet Protocol (IP) packets, and act as a router between radio terminal device and the rest of the access network, and the rest of the access network can include an Internet protocol (IP) communication network. The network devices may also coordinate attribute management for the air interface. For example, the network device in the embodiments of the present application may be a base transceiver station (BTS) in a global system for mobile communications (GSM) or a code division multiple access (CDMA), may also be a node B in a wide-band code division multiple access (WCDMA), may also be an evolutional node B (eNB or e-Node B) in a long term evolution (LTE) system, a 5G base station (gNB) in 5G network architecture (next generation system), may also be a Home evolved Node B (HeNB), a relay node (relay node), a femto, a pico base station (pico), etc., which are not limited in the embodiments of the present application. In some network structures, a network device may include a centralized unit (CU) node and a distributed unit (DU) node, and the centralized unit and the distributed unit may also be geographically separated.

As will be appreciated by those skilled in the art, embodiments of the present application may be provided as a method, system, or computer program product. Accordingly, the present application may take the form of an entirely hardware embodiment, an entirely software embodiment, or an embodiment combining software and hardware aspects. Furthermore, the present application may take the form of a computer program product embodied on one or more computer-usable storage media having computer-usable program code embodied therein, including but not limited to disk storage, optical storage, and the like.

The present application is described with reference to flow charts and/or block diagrams of methods, apparatus (systems), and computer program products according to embodiments of the present application. It will be understood that each flow and/or block in the flow charts and/or block diagrams, and combinations thereof may be implemented by computer-executable instructions. These computer-executable instructions may be provided to processors of a general purpose computer, a special purpose computer, an embedded processor or other programmable data processing device to produce a machine and the instructions executed by the processor of the computer or other programmable data processing device form a means for performing the functions specified in one or more flows in a flowchart and/or one or more blocks of a block diagram.

These processor-executable instructions may also be stored in a processor-readable memory capable of directing a computer or other programmable data processing apparatus to operate in a particular manner, and the instructions stored in the processor-readable memory may result in a manufacture including instruction means, the instruction means can perform the functions specified in one or more flows of the flowchart and/or one or more blocks of the block diagram.

These processor-executable instructions may also be loaded onto a computer or other programmable data processing device to cause a series of operational steps to be performed on the computer or other programmable device to produce a computer-implemented process and instructions performed on the computer or other programmable devices provide steps for performing the functions specified in one or more flows of the flowchart and/or one or more blocks of the block diagram.

It will be apparent to those skilled in the art that various modifications and variations may be made in the present application without departing from the scope of the present application. As such, provided that these modifications and variations of the present application fall within the scope of the claims of the present application and their equivalents, the present application is also intended to cover such modifications and variations.

## Claims

1. A method for determining beam for backhaul link, performed by a network control repeater, comprising:

   obtaining first beam information, wherein the first beam information comprises beam information for a control link or unified beam indication information; and
   determining a beam for a backhaul link based on the first beam information;
   or
   obtaining second beam information, wherein the second beam information is default configured beam information for a backhaul link, or beam information for a backhaul link indicated by a network device, or beam information for a backhaul link determined based on a predefined rule; and
   determining a beam for the backhaul link based on the second beam information.

2. The method of claim 1, wherein determining the beam for the backhaul link based on the first beam information comprises:
   determining the beam for the backhaul link based on most recently received first beam information.

3. The method of claim 2, wherein determining the beam for the backhaul link based on the most recently received first beam information comprises:

   determining the beam for the backhaul link based on the most recently received first beam information starting from a first timing,
   wherein a way for determining the first timing comprises:

      taking a start symbol of a first slot after a first control signaling being effective as the first timing; or
      taking a start symbol of a transmission slot for a control link indicated by a first control signaling as the first timing; or
      taking a start symbol of a next slot counting from a transmission slot for a control link indicated by a first control signaling as the first timing;
      wherein the first control signaling is a control signaling indicating the most recently received first beam information.

4. The method of claim 3, wherein determining the beam for the backhaul link based on the most recently received first beam information comprises:

      in case that a first timer does not expire, determining the beam for the backhaul link based on the most recently received first beam information,

wherein the first timer starts at the first timing.

5. The method of any one of claims 1 to 4, further comprising:
in case that the first beam information is unable to be used, performing any one of the following operations:

determining the beam for the backhaul link based on default configured beam information; determining the beam for the backhaul link based on a given beam set and a polling rule; determining the beam for the backhaul link based on beam information for the backhaul link indicated by a network device; or not performing data transmission and/or data reception in a backhaul link.

6. The method of any one of claims 1 to 4, wherein determining the beam for the backhaul link based on the first beam information comprises any one of the following:

in case that an uplink beam and a downlink beam are separated from each other, determining an uplink beam for the backhaul link based on first uplink beam information; and/or determining a downlink beam for the backhaul link based on first downlink beam information; or in case that an uplink beam and a downlink beam are jointly managed, determining an uplink beam for the backhaul link and a downlink beam for the backhaul link based on first joint uplink and downlink beam information.

7. The method of claim 6, further comprising:

sending first parameter information to the network device, wherein the first parameter information is used to indicate whether the network control repeater supports the joint uplink beam and downlink beam management; and/or receiving second parameter information sent from the network device, wherein the second parameter information is used to indicate whether the network control repeater performs the joint uplink beam and downlink beam management.

8. The method of claim 4, further comprising:

sending first indication information to the network device, wherein the first indication information is used to indicate an index of a duration of the first timer in a timer duration set; and/or

receiving second indication information sent from the network device, wherein the second indication information is used to indicate an index of a duration of the first timer in a timer duration set.

9. The method of claim 8, wherein the timer duration set is determined based on enumerated duration values or a quantity of symbols; or, the timer duration set is determined based on one or more of a configured minimum duration value, a configured maximum duration value, or a configured granularity.

10. The method of any one of claims 1 to 4, further comprising:
receiving third parameter information sent from the network device, wherein the third parameter information is used to indicate whether the network control repeater uses the unified beam indication information for the backhaul link.

11. The method of any one of claims 1 to 4, wherein the first beam information comprises one or more of the following:

a beam index; an index of a reference signal resource for measurement; or a time domain resource location using the first beam information.

12. A method for determining beam for backhaul link, performed by a network device, comprising:

determining first beam information, wherein the first beam information comprises beam information corresponding to a control link between a network control repeater and the network device, or unified beam indication information corresponding to a network control repeater; and determining a beam for a backhaul link between the network control repeater based on the first beam information; or determining second beam information, wherein the second beam information is default configured beam information for a backhaul link, or beam information for a backhaul link indicated by the network device to the network control repeater, or beam information for a backhaul link determined based on a predefined rule; and determining a beam for the backhaul link based on the second beam information.

13. The method of claim 12, wherein determining the beam for the backhaul link between the network control repeater based on the first beam information comprises:

determining the beam for the backhaul link based on most recently sent first beam information.

14. The method of claim 13, wherein determining the beam for the backhaul link based on the most recently sent first beam information comprises:

   determining the beam for the backhaul link based on the most recently sent first beam information starting from a first timing, wherein a way for determining the first timing comprises:

   taking a start symbol of a first slot after a first control signaling being effective as the first timing; or
   taking a start symbol of a transmission slot for a control link indicated by a first control signaling as the first timing; or
   taking a start symbol of a next slot counting from a transmission slot for a control link indicated by a first control signaling as the first timing;
   wherein the first control signaling is a control signaling indicating the most recently sent first beam information.

15. The method of claim 14, wherein determining the beam for the backhaul link based on the most recently sent first beam information comprises:

   in case that a first timer does not expire, determining the beam for the backhaul link based on the most recently sent first beam information, wherein the first timer starts at the first timing.

16. The method of any one of claims 12 to 15, further comprising:
   in case of determining that the network control repeater is unable to use the first beam information, performing any one of the following operations:

   determining the beam for the backhaul link based on default configured beam information;
   determining the beam for the backhaul link based on a given beam set and a polling rule;
   determining the beam for the backhaul link based on beam information for the backhaul link indicated by the network device; or
   not performing data transmission and/or data reception in the backhaul link.

17. The method of any one of claims 12 to 15, wherein determining the beam for the backhaul link between the network control repeater based on the first beam information comprises any one of the following:

   in case that an uplink beam and a downlink beam are separated from each other, determining an uplink beam for the backhaul link based on first uplink beam information; and/or determining a downlink beam for the backhaul link based on first downlink beam information; or
   in case that an uplink beam and a downlink beam are jointly managed, determining an uplink beam for the backhaul link and a downlink beam for the backhaul link based on first joint uplink and downlink beam information.

18. The method of claim 17, further comprising:

   receiving first parameter information sent from the network control repeater, wherein the first parameter information is used to indicate whether the network control repeater supports the joint uplink beam and downlink beam management; and/or
   sending second parameter information to the network control repeater, wherein the second parameter information is used to indicate whether the network control repeater performs the joint uplink beam and downlink beam management.

19. The method of claim 15, further comprising:

   receiving first indication information sent from the network control repeater, wherein the first indication information is used to indicate an index of a duration of the first timer in a timer duration set; and/or
   sending second indication information to the network control repeater, wherein the second indication information is used to indicate an index of a duration of the first timer in a timer duration set.

20. The method of claim 19, wherein the timer duration set is determined based on enumerated duration values or a quantity of symbols; or, the timer duration set is determined based on one or more of a configured minimum duration value, a configured maximum duration value, or a configured granularity.

21. The method of any one of claims 12 to 15, further comprising:
   sending third parameter information to the network control repeater, wherein the third parameter information is used to indicate whether the network control repeater uses the unified beam indication information for the backhaul link.

22. The method of any one of claims 12 to 15, wherein the first beam information comprises one or more of the following:

a beam index;

an index of a reference signal resource for measurement; or

a time domain resource location using the first beam information.

23. A network control repeater, comprising a memory, a transceiver and a processor,

where the memory is used for storing a computer program, the transceiver is used for receiving and sending data under control of the processor, and the processor is used for reading the computer program in the memory and performing the following operations:

obtaining first beam information, wherein the first beam information comprises beam information for a control link or unified beam indication information; and

determining a beam for a backhaul link based on the first beam information;

or

obtaining second beam information, wherein the second beam information is default configured beam information for a backhaul link, or beam information for a backhaul link indicated by a network device, or beam information for a backhaul link determined based on a predefined rule; and

determining a beam for the backhaul link based on the second beam information.

24. The network control repeater of claim 23, wherein determining the beam for the backhaul link based on the first beam information comprises:

determining the beam for the backhaul link based on the most recently received first beam information.

25. The network control repeater of claim 24, wherein determining the beam for the backhaul link based on the most recently received first beam information comprises:

determining the beam for the backhaul link based on the most recently received first beam information starting from a first timing,

wherein a way for determining the first timing comprises:

taking a start symbol of a first slot after a first control signaling being effective as the first timing; or

taking a start symbol of a transmission slot for a control link indicated by a first control signaling as the first timing; or

taking a start symbol of a next slot counting from a transmission slot for a control link indicated by a first control signaling as the first timing;

wherein the first control signaling is a control signaling indicating the most recently received first beam information.

26. The network control repeater of claim 25, wherein determining the beam for the backhaul link based on the most recently received first beam information comprises:

in case that a first timer does not expire, determining the beam for the backhaul link based on the most recently received first beam information,

wherein the first timer starts at the first timing.

27. The network control repeater of any one of claims 23 to 26, wherein the operations further comprise:

in case that the first beam information is unable to be used, performing any one of the following operations:

determining the beam for the backhaul link based on default configured beam information;

determining the beam for the backhaul link based on a given beam set and a polling rule;

determining the beam for the backhaul link based on beam information for the backhaul link indicated by a network device; or

not performing data transmission and/or data reception in a backhaul link.

28. The network control repeater of any one of claims 23 to 26, wherein determining the beam for the backhaul link based on the first beam information comprises any one of the following:

in case that an uplink beam and a downlink beam are separated from each other, determining an uplink beam for the backhaul link based on first uplink beam information; and/or determining a downlink beam for the backhaul link based on first downlink beam information; or,

in case that an uplink beam and a downlink beam are jointly managed, determining an uplink beam for the backhaul link and a downlink beam for the backhaul link based on first joint uplink and downlink beam information.

29. The network control repeater of claim 28, wherein the operations further comprise:

sending first parameter information to the network device, wherein the first parameter information is used to indicate whether the network control repeater supports the joint uplink beam and downlink beam management; and/or receiving second parameter information sent from the network device, wherein the second parameter information is used to indicate whether the network control repeater performs the joint uplink beam and downlink beam management.

30. The network control repeater of claim 26, wherein the operations further comprise:

sending first indication information to the network device, wherein the first indication information is used to indicate an index of a duration of the first timer in a timer duration set; and/or receiving second indication information sent from the network device, wherein the second indication information is used to indicate an index of a duration of the first timer in a timer duration set.

31. The network control repeater of claim 30, wherein the timer duration set is determined based on enumerated duration values or a quantity of symbols; or, the timer duration set is determined based on one or more of a configured minimum duration value, a configured maximum duration value, or a configured granularity.

32. The network control repeater of any one of claims 23 to 26, wherein the operations further comprise:
receiving third parameter information sent from the network device, wherein the third parameter information is used to indicate whether the network control repeater uses the unified beam indication information for the backhaul link.

33. The network control repeater of any one of claims 23 to 26, wherein the first beam information comprises one or more of the following:

a beam index;
an index of a reference signal resource for measurement; or
a time domain resource location using the first beam information.

34. A network device, comprising a memory, a transceiver and a processor,
where the memory is used for storing a computer program, the transceiver is used for receiving and sending data under control of the processor, and the processor is used for reading the computer program in the memory and performing the following operations:

determining first beam information, wherein the first beam information comprises beam information corresponding to a control link between a network control repeater, or unified beam indication information corresponding to a network control repeater; and
determining a beam for a backhaul link between the network control repeater based on the first beam information;
or
determining second beam information, wherein the second beam information is default configured beam information for a backhaul link, or beam information for a backhaul link indicated by the network device to the network control repeater, or beam information for a backhaul link determined based on a predefined rule; and
determining a beam for the backhaul link based on the second beam information.

35. The network device of claim 34, wherein determining the beam for the backhaul link between the network control repeater based on the first beam information comprises:
determining the beam for the backhaul link based on most recently sent first beam information.

36. The network device of claim 35, wherein determining the beam for the backhaul link based on the most recently sent first beam information comprises:

determining the beam for the backhaul link based on the most recently sent first beam information starting from a first timing,
wherein a way for determining the first timing comprises:

taking a start symbol of a first slot after a first control signaling being effective as the first timing; or
taking a start symbol of a transmission slot for a control link indicated by a first control signaling as the first timing; or
taking a start symbol of a next slot counting from a transmission slot for a control link indicated by a first control signaling as the first timing;
wherein the first control signaling is a control signaling indicating the most recently sent first beam information.

37. The network device of claim 36, wherein determining the beam for the backhaul link based on the most recently sent first beam information comprises:

in case that a first timer does not expire, determining the beam for the backhaul link based on the most recently sent first beam information,
wherein the first timer starts at the first timing.

38. The network device of any one of claims 34 to 37, wherein the operations further comprise:

in case of determining that the network control repeater is unable to use the first beam information, performing any one of the following operations:

> determining the beam for the backhaul link based on default configured beam information; determining the beam for the backhaul link based on a given beam set and a polling rule; determining the beam for the backhaul link based on beam information for the backhaul link indicated by the network device; or
> not performing data transmission and/or data reception in the backhaul link.

**39.** The network device of any one of claims 34 to 37, wherein determining the beam for the backhaul link between the network control repeater based on the first beam information comprises any one of the following:

> in case that an uplink beam and a downlink beam are separated from each other, determining an uplink beam for the backhaul link based on first uplink beam information; and/or determining a downlink beam for the backhaul link based on first downlink beam information; or
> in case that an uplink beam and a downlink beam are jointly managed, determining an uplink beam for the backhaul link and a downlink beam for the backhaul link based on first joint uplink and downlink beam information.

**40.** The network device of claim 39, wherein the operations further comprise:

> receiving first parameter information sent from the network control repeater, wherein the first parameter information is used to indicate whether the network control repeater supports the joint uplink beam and downlink beam management; and/or
> sending second parameter information to the network control repeater, wherein the second parameter information is used to indicate whether the network control repeater performs the joint uplink beam and downlink beam management.

**41.** The network device of claim 37, wherein the operations further comprise:

> receiving first indication information sent from the network control repeater, wherein the first indication information is used to indicate an index of a duration of the first timer in a timer duration set; and/or
> sending second indication information to the network control repeater, wherein the second indication information is used to indicate an index of a duration of the first timer in a timer duration set.

**42.** The network device of claim 41, wherein the timer duration set is determined based on enumerated duration values or a quantity of symbols; or, the timer duration set is determined based on one or more of a configured minimum duration value, a configured maximum duration value, or a configured granularity.

**43.** The network device of any one of claims 34 to 37, wherein the operations further comprise:
sending third parameter information to the network control repeater, wherein the third parameter information is used to indicate whether the network control repeater uses the unified beam indication information for the backhaul link.

**44.** The network device of any one of claims 34 to 37, wherein the first beam information comprises one or more of the following:

> a beam index;
> an index of a reference signal resource for measurement; or
> a time domain resource location using the first beam information.

**45.** An apparatus for determining beam for backhaul link, comprising:

> an obtaining unit, used for obtaining first beam information, wherein the first beam information comprises beam information for a control link or unified beam indication information; and
> a first determining unit, used for determining a beam for a backhaul link based on the first beam information;
> or
> an obtaining unit, used for obtaining second beam information, wherein the second beam information is default configured beam information for a backhaul link, or beam information for a backhaul link indicated by a network device, or beam information for a backhaul link determined based on a predefined rule; and
> a first determining module, used for determining a beam for the backhaul link based on the second beam information.

**46.** The apparatus of claim 45, wherein determining the beam for the backhaul link based on the first beam information comprises:
determining the beam for the backhaul link based on most recently received first beam information.

**47.** The apparatus of claim 46, wherein determining the beam for the backhaul link based on the most recently received first beam information comprises:

determining the beam for the backhaul link based on the most recently received first beam information starting from a first timing, wherein a way for determining the first timing comprises:

taking a start symbol of a first slot after a first control signaling being effective as the first timing; or taking a start symbol of a transmission slot for a control link indicated by a first control signaling as the first timing; or taking a start symbol of a next slot counting from a transmission slot for a control link indicated by a first control signaling as the first timing; wherein the first control signaling is a control signaling indicating the most recently received first beam information.

48. The apparatus of claim 47, wherein determining the beam for the backhaul link based on the most recently received first beam information comprises:

in case that a first timer does not expire, determining the beam for the backhaul link based on the most recently received first beam information, wherein the first timer starts at the first timing.

49. The apparatus of any one of claims 45 to 48, wherein the first determining unit is further used for: in case that the first beam information is unable to be used, performing any one of the following operations:

determining the beam for the backhaul link based on default configured beam information; determining the beam for the backhaul link based on a given beam set and a polling rule; determining the beam for the backhaul link based on beam information for the backhaul link indicated by a network device; or not performing data transmission and/or data reception in a backhaul link.

50. The apparatus of any one of claims 45 to 48, wherein determining the beam for the backhaul link based on the first beam information comprises any one of the following:

in case that an uplink beam and a downlink beam are separated from each other, determining an uplink beam for the backhaul link based on first uplink beam information; and/or determining a downlink beam for the backhaul link based on first downlink beam information; or in case that an uplink beam and a downlink beam are jointly managed, determining an uplink beam for the backhaul link and a downlink beam for the backhaul link based on first joint uplink and downlink beam information.

51. The apparatus of claim 50, further comprising a first transmitting unit, used for:

sending first parameter information to the network device, wherein the first parameter information is used to indicate whether a network control repeater supports the joint uplink beam and downlink beam management; and/or receiving second parameter information sent from the network device, wherein the second parameter information is used to indicate whether the network control repeater performs the joint uplink beam and downlink beam management.

52. The apparatus of claim 48, further comprising a second transmitting unit, used for:

sending first indication information to the network device, wherein the first indication information is used to indicate an index of a duration of the first timer in a timer duration set; and/or receiving second indication information sent from the network device, wherein the second indication information is used to indicate an index of a duration of the first timer in a timer duration set.

53. The apparatus of claim 52, wherein the timer duration set is determined based on enumerated duration values or a quantity of symbols; or, the timer duration set is determined based on one or more of a configured minimum duration value, a configured maximum duration value, or a configured granularity.

54. The apparatus of any one of claims 45 to 48, further comprising a third transmitting unit, used for: receiving third parameter information sent from the network device, wherein the third parameter information is used to indicate whether the network control repeater uses the unified beam indication information for the backhaul link.

55. The apparatus of any one of claims 45 to 48, wherein the first beam information comprises one or more of the following:

a beam index; an index of a reference signal resource for measurement; or

a time domain resource location using the first beam information.

56. An apparatus for determining beam for backhaul link, comprising:

a second determining unit, used for determining first beam information, wherein the first beam information comprises beam information corresponding to a control link between a network control repeater and the network device, or unified beam indication information corresponding to a network control repeater; and
a third determining unit, used for determining a beam for a backhaul link between the network control repeater based on the first beam information;
or
a second determining unit, used for determining second beam information, wherein the second beam information is default configured beam information for a backhaul link, or beam information for a backhaul link indicated by a network device to the network control repeater, or beam information for a backhaul link determined based on a predefined rule; and
a third determining unit, used for determining a beam for the backhaul link based on the second beam information.

57. The apparatus of claim 56, wherein determining the beam for the backhaul link between the network control repeater based on the first beam information comprises:
determining the beam for the backhaul link based on most recently sent first beam information.

58. The apparatus of claim 57, wherein determining the beam for the backhaul link based on the most recently sent first beam information comprises:

determining the beam for the backhaul link based on the most recently sent first beam information starting from a first timing,
wherein a way for determining the first timing comprises:

taking a start symbol of a first slot after a first control signaling being effective as the first timing; or,
taking a start symbol of a transmission slot for a control link indicated by a first control signaling as the first timing; or,
taking a start symbol of a next slot counting from a transmission slot for a control link indicated by a first control signaling as the first timing;
wherein the first control signaling is a control signaling indicating the most recently sent first beam information.

59. The apparatus of claim 58, wherein determining the beam for the backhaul link based on the most recently sent first beam information comprises:

in case that a first timer does not expire, determining the beam for the backhaul link based on the most recently sent first beam information, wherein the first timer starts at the first timing.

60. The apparatus of any one of claims 56 to 59, wherein the third determining unit is further used for:
in case of determining that the network control repeater is unable to use the first beam information, performing any one of the following operations:

determining the beam for the backhaul link based on default configured beam information;
determining the beam for the backhaul link based on a given beam set and a polling rule;
determining the beam for the backhaul link based on beam information for the backhaul link indicated by the network device; or
not performing data transmission and/or data reception in the backhaul link.

61. The apparatus of any one of claims 56 to 59, wherein determining the beam for the backhaul link between the network control repeater based on the first beam information comprises any one of the following:

in case that an uplink beam and a downlink beam are separated from each other, determining an uplink beam for the backhaul link based on first uplink beam information; and/or determining a downlink beam for the backhaul link based on first downlink beam information; or
in case that an uplink beam and a downlink beam are jointly managed, determining an uplink beam for the backhaul link and a downlink beam for the backhaul link based on first joint uplink and downlink beam information.

62. The apparatus of claim 61, further comprising a fourth transmitting unit, used for:

receiving first parameter information sent from the network control repeater, wherein the first parameter information is used to indicate whether the network control repeater supports the joint uplink beam and downlink beam management; and/or
sending second parameter information to the network control repeater, wherein the second parameter information is used to indicate whether the network control repeater performs the joint uplink beam and downlink beam management.

63. The apparatus of claim 59, further comprising a fifth transmitting unit, used for:

receiving first indication information sent from the network control repeater, wherein the first indication information is used to indicate an index of a duration of the first timer in a timer duration set; and/or
sending second indication information to the network control repeater, wherein the second indication information is used to indicate an index of a duration of the first timer in a timer duration set.

64. The apparatus of claim 63, wherein the timer duration set is determined based on enumerated duration values or a quantity of symbols; or, the timer duration set is determined based on one or more of a configured minimum duration value, a configured maximum duration value, or a configured granularity.

65. The apparatus of any one of claims 56 to 59, further comprising a sixth transmitting unit, used for:
sending third parameter information to the network control repeater, wherein the third parameter information is used to indicate whether the network control repeater uses the unified beam indication information for the backhaul link.

66. The apparatus of any one of claims 56 to 59, wherein the first beam information comprises one or more of the following:

a beam index;
an index of a reference signal resource for measurement; or
a time domain resource location using the first beam information.

67. A computer-readable storage medium storing a computer program, wherein the computer program is used to cause a computer to perform the method of any one of claims 1 to 11, or perform the method of any one of claims 12 to 22.

NCR

Control link

NCR-terminal

Internal interface

Backhaul link

NCR-radio unit

Forwarding link for service

Base station

Terminal

FIG. 1

Obtaining first beam information, where the first beam information comprises beam information for a control link or unified beam indication information

200

Determining a beam for a backhaul link based on the first beam information

201

FIG. 2

Effective timing of control signaling

QCL duration

Control signaling

Control link

Slot n

Slot m

Way 1

Way 2

Way 3

FIG. 3

Determining first beam information, where the first beam information comprises beam information corresponding to a control link between a network control repeater, or unified beam indication information corresponding to a network control repeater ⟋— 400

Determining a beam for a backhaul link between the network control repeater based on the first beam information ⟋— 401

FIG. 4

Control link in DL    Control link in UL

Frequency
diversion
multiplexing

Backhaul | Backhaul | Backhaul | Backhaul | Backhaul | Backhaul
link in | link in | link in | link in | link in | link in
DL | DL | UL | UL | DL | UL

Control link in DL    Control link in UL

Time diversion
multiplexing

Backhaul | Backhaul | Backhaul | Backhaul
link in DL | link in DL | link in UL | link in DL

FIG. 5

Control
link in DL

Control
link in UL

Frequency
diversion
multiplexing

Backhaul
link in DL

Backhaul
link in DL

Backhaul
link in UL

Backhaul
link in UL

Backhaul
link in DL

Backhaul
link in UL

Control
link in DL

Control
link in UL

Time diversion
multiplexing

Backhaul
link in DL

Backhaul
link in DL

Backhaul
link in UL

Backhaul
link in DL

FIG. 6

Control link in DL    Control link in UL

Frequency
diversion
multiplexing

Backhaul         Backhaul   Backhaul   Backhaul     Backhaul    Backhaul
link in DL       link in DL link in UL link in UL   link in DL  link in UL

>Timer duration

=Timer duration

Control link in DL    Control link in UL

Time diversion
multiplexing

Backhaul          Backhaul            Backhaul     Backhaul
link in DL        link in DL          link in UL   link in DL

>Timer duration

FIG. 7

Control link in DL   Control link in UL

Frequency
diversion
multiplexing

Backhaul | Backhaul | Backhaul | Backhaul | Backhaul | Backhaul
link in DL | link in DL | link in UL | link in UL | link in DL | link in UL

=Timer duration

Control
link in DL

Control
link in UL

Time diversion
multiplexing

Backhaul
link in DL

Backhaul
link in DL

Backhaul
link in UL

Backhaul
link in DL

=Timer duration

FIG. 8

41

Network-controlled repeater

Processor ~900

Memory ~920

Bus interface

Transceiver ~910

FIG. 9

Network device

Processor ~1000

Memory ~1020

Bus interface

Transceiver ~1010

FIG. 10

Obtaining unit ~1100

First determining unit ~1110

FIG. 11

Second determining unit ~1200

Third determining unit ~1210

FIG. 12

## INTERNATIONAL SEARCH REPORT

| International application No. |
| --- |
| **PCT/CN2023/102550** |

| A. | CLASSIFICATION OF SUBJECT MATTER |
| --- | --- |

H04W 40/22(2009.01)i;  H04B 7/026(2017.01)i

According to International Patent Classification (IPC) or to both national classification and IPC

| B. | FIELDS SEARCHED |
| --- | --- |

Minimum documentation searched (classification system followed by classification symbols)

IPC: H04W H04B H04L

Documentation searched other than minimum documentation to the extent that such documents are included in the fields searched

Electronic data base consulted during the international search (name of data base and, where practicable, search terms used)

CNTXT, ENTXT, ENTXTC, DWPI, VEN, 3GPP: 网络控制中继, 回程转发链路, 控制链路, 波束, 指示, NCR, FLB, C-link, DCI, SCI, TCI, beam, indication

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | FUJITSU. "Summary#2 on L1/L2 signaling for side control information" *3GPP TSG RAN WG1 Meeting #109-e R1- 2205456*, 17 May 2022 (2022-05-17), sections 2-3 | 1-67 |
| X | FUJITSU. "Summary#3 on L1/L2 signaling for side control information" *3GPP TSG RAN WG1 Meeting #109-e R1-2205519*, 20 May 2022 (2022-05-20), sections 2-3 | 1-67 |
| A | CN 114600380 A (QUALCOMM INC.) 07 June 2022 (2022-06-07) entire document | 1-67 |
| A | CN 114270910 A (BEIJING XIAOMI MOBILE SOFTWARE CO., LTD.) 01 April 2022 (2022-04-01) entire document | 1-67 |
| A | CN 114467265 A (QUALCOMM INC.) 10 May 2022 (2022-05-10) entire document | 1-67 |
| A | US 2021014848 A1 (DAVYDOV, Alexei et al.) 14 January 2021 (2021-01-14) entire document | 1-67 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **15 September 2023** | **20 September 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

### INTERNATIONAL SEARCH REPORT
Information on patent family members

International application No.

**PCT/CN2023/102550**

| Patent document cited in search report | | | Publication date (day/month/year) | Patent family member(s) | | | Publication date (day/month/year) |
|---|---|---|---|---|---|---|---|
| CN | 114600380 | A | 07 June 2022 | WO | 2021086477 | A1 | 06 May 2021 |
| | | | | US | 2021126694 | A1 | 29 April 2021 |
| | | | | EP | 4052378 | A1 | 07 September 2022 |
| CN | 114270910 | A | 01 April 2022 | None | | | |
| CN | 114467265 | A | 10 May 2022 | EP | 4038765 | A1 | 10 August 2022 |
| | | | | WO | 2021067097 | A1 | 08 April 2021 |
| | | | | US | 2021105749 | A1 | 08 April 2021 |
| US | 2021014848 | A1 | 14 January 2021 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210918689